# EUROPEAN PATENT SPECIFICATION

(11) **EP 3 154 875 B1**
(45) Date of publication and mention of the grant of the patent: **05.08.2020**
(21) Application number: 15733891.4
(22) Date of filing: 12.06.2015
(51) Int. Cl.: B65D 85/804

(54) **CARTRIDGE FOR THE PREPARATION OF BEVERAGES**
KAPSEL FÜR DIE ZUBEREITUNG VON GETRÄNKEN
CARTOUCHE POUR LA PRÉPARATION DE BOISSONS

(30) Priority: 13.06.2014 GB 201410615
(43) Date of publication of application: 19.04.2017
(73) Proprietor: Koninklijke Douwe Egberts B.V., 3532 AD Utrecht (NL)
(72) Inventor: MASSEY, Tulay, Banbury OX16 2QU (GB); MELROSE, John, Banbury OX16 2QU (GB); SAUNDERS, Tony, Banbury OX16 2QU (GB); CARR, Simon, Banbury OX16 2QU (GB); RADCLIFFE, Ian Alexander James, Aylesbury Buckinghamshire HP22 5UP (GB); BEEKER, Willem Paul, 5629 KE Eindhoven (NL); CURTIS, Stuart James, Sawtry Cambridgeshire PE28 5WP (GB)
(74) Representative: Boult Wade Tennant LLP
(86) International application number: PCT/IB2015/001013
(87) International publication number: WO 2015/189689

(56) References cited:
- EP-A1- 1 440 903
- WO-A1-2009/115475
- WO-A1-2010/112353
- WO-A1-2011/154690
- WO-A1-2014/033340
- WO-A2-2012/094244
- WO-A2-2014/110355

## Description

The present disclosure relates to cartridges for the preparation of beverages and which contain one or more ingredients for the preparation of beverages.

### Background of the Disclosure

Domestic filter coffee machines have been widely available since the 1960s. Domestic coffee machines have developed significantly since the introduction of the first filter machines and are now essential pieces of kitchen equipment in many households. Some such machines dispense individual servings of a beverage directly into a drinking receptacle, and derive the beverage from a bulk supply of beverage ingredient or from individual packages of beverage ingredient such as pods, pads or cartridges. In the following specification, such packages will be referenced by the general term cartridges. Machines which use such cartridges eliminate the need for cleaning and can enable the user to make a selection of beverages. An example of one system using such cartridges is described in EP-A-1440903. The beverages are formed from brewing, mixing, dissolving or suspending the beverage ingredients in water. For example, for coffee beverages, heated water is forced through the cartridges to form the extracted solution. The use of cartridges in such machines has become increasingly popular due to their convenience and the quality of the beverage produced.

To allow a user to produce a full range of beverages in the home it is not only necessary to provide means for brewing high quality beverages such as filter coffee and tea, it is also necessary to provide the user with means for producing foamed beverages or beverage components. This may be, for example to make beverages such as cappuccino. Traditionally foamed milk has been produced in coffee shops by using a steam wand to direct a steam jet into a reservoir of liquid milk. This is still the primary method of producing foamed milk in a commercial environment. However, it is inconvenient to use steam jet equipment in the home since it can be dangerous if not used correctly and can also be difficult to clean. This is particularly disadvantageous for equipment used with milk which requires thorough cleaning to prevent contamination.

An example of a cartridge for a domestic beverage machine which is suitable for producing foamed milk from a concentrated liquid milk ingredient is known from EP-A-1716055. Foamed milk is produced from the cartridge by causing air to become entrained in a milk stream produced when water is mixed with the concentrated liquid milk ingredient contained within the cartridge. This is achieved by passing the beverage so formed through an eductor within the cartridge. The eductor comprises an aperture forming a constriction in the flow path which is arranged to produce a jet of the beverage and a consequent reduction in the pressure of the beverage. The jet of beverage exits the constriction and passes over an air inlet whilst still at a sub-atmospheric pressure causing air to become entrained in the beverage thereby creating a foamed beverage. Foamed milk produced from such cartridges allows coffee shop style beverages, such as cappuccino, to be readily produced in the home without the need for potentially dangerous, and difficult to clean, steam wand equipment.

Foamed beverages may also be produced from cartridges of this type containing soluble and powdered beverage ingredients, for example chocolate powder for a hot chocolate beverage or milk powder for a cappuccino-type beverage. However, there are a number of particular problems in using these cartridges for soluble, powdered and liquid beverage ingredients.

It is necessary to adequately mix the beverage ingredient with water injected into the cartridge to provide a uniform beverage containing the desired amount of beverage ingredient. Inadequate mixing may result in some beverage ingredient remaining in the chamber or in coagulates of beverage ingredient forming in the beverage. In addition, coagulates of this type may block the constriction, preventing flow of the beverage through the constriction to form a jet. This may cause an undesirable back-pressure in the cartridge behind the constriction, resulting in splitting or other failure of the cartridge and/or preventing proper functioning of the eductor by hindering the production of the jet of beverage. It should also be appreciated that the soluble beverage mass may contain a minority of insoluble material (as found in chocolate powder) or large particles of soluble beverage ingredients (milk powder particles, for example) which may not fully dissolve in the water. These particles may likewise function to block the flow constriction.

For these reasons, it is necessary to manage the flow of water within the cartridge to ensure proper mixing and pressure distribution and foaming of the beverage.

Accordingly, there is a desire for a beverage cartridge which ensures adequate mixing of the beverage ingredients, ensures proper water flow with in the cartridge and prevents undesirable levels of back pressure when using a flow constriction to foam the beverage.

It will be understood that by the term "cartridge" as used herein is meant a capsule, pod, package, or container which contains one or more beverage ingredients in the manner described and is suitable for use with a beverage preparation machine. The cartridge may comprise a single component or an equivalent of multiple components. Preferably the cartridge is adapted to produce an individual serving of beverage. The cartridge may be rigid, semi-rigid or flexible. The inlet and outlet of the cartridge may be open or require opening in use by, for example, piercing.

In the following description the terms "upper" and "lower" and equivalents will be used to describe the relational positioning of features of the disclosure. The terms "upper" and "lower" and equivalents should be understood to refer to the cartridge (or other components) in its normal orientation for insertion into a beverage preparation machine and subsequent dispensing. In particular, "upper" and "lower" refer, respectively, to relative positions nearer or further from a closed top 29 of the cartridge. In addition, the terms "inner" and "outer" and equivalents will be used to describe the relational positioning of features of the disclosure. The terms "inner" and "outer" and equivalents should be understood to refer to relative positions in the cartridge (or other components) being, respectively, nearer or further from a centre or major axis of the cartridge 1 (or other component).

WO2010112353 describes a capsule for use in a beverage production device, the capsule containing ingredients to produce a nutritional or food liquid when a liquid is fed into the capsule at an inlet face thereof, the capsule being provided with a filter having a plurality of filtering orifices, wherein it comprises a flow collection member placed downstream of the filter to collect the filtered liquid from the filtering orifices. The collection member comprises at least one restriction orifice to focus the flow of liquid in at least one jet of liquid at high velocity in the compartment containing the ingredients.

WO2009115475 describes a cartridge containing a food substance adapted to interact with water injected in the cartridge to produce a food liquid comprising: a cup having a chamber for holding the food substance and a lid, a puncturable delivery wall that holds the substance in the chamber, a puncturing structure to puncture at least one opening in the delivery wall as a response of water filling the chamber, a collecting area for collecting the liquid passing through the delivery wall in a substantially axial direction; said collecting area being placed downstream the puncturable delivery wall, at least one liquid outlet in the collecting area for allowing the liquid to leave the collecting area, wherein the cartridge comprises a support structure comprising at least one support surface configured to support at least one portion of the delivery wall to maintain a flow gap between the puncture structure and the at least one outlet.

WO2011154690 describes acartridge containing a beverage ingredient which comprises liquid beverage ingredient and elongate particles of beverage ingredient. The cartridge comprises an inlet for the introduction of an aqueous medium, an outlet for a beverage produced from the beverage ingredient, and a flow path linking the inlet to the outlet. The cartridge further comprises a filter located in the flow path and an aperture located in the flow path downstream of the filter, the aperture arranged, in use, to generate a jet of beverage. The filter has a plurality of openings sized to retain a substantial portion of the elongate particles on the upstream side of the filter to prevent blockage of the aperture. The maximum area of each opening on the upstream face of the filter is no more than ten times the area of the aperture.

### Summary of the Invention

The present invention provides a cartridge for preparation of a beverage as claimed in claim 1 or claim 9.

### Summary of the Disclosure

In a first aspect of the disclosure there is provided a cartridge for preparation of a beverage, the cartridge being sealed prior to use and containing one or more beverage ingredients, the cartridge being suitable to receive in use an aqueous medium which may be brought into contact with the one or more beverage ingredients to produce a beverage which may be output from the cartridge,
the cartridge comprising:
- a body defining a beverage ingredient chamber containing the one or more beverage ingredients;
- a first filter defining an exit from the beverage ingredient chamber;
- a second filter downstream of, and spaced apart from, the first filter; and
- a flow constriction downstream of the second filter,
such that in use beverage produced from the one or more beverage ingredients passes, in order, through the first filter, the second filter and the flow constriction.

In the present disclosure, reference to "one or more beverage ingredients" and "beverage ingredient(s)" is intended to refer to one or more ingredients suitable for forming a beverage. The "one or more beverage ingredients" / "beverage ingredient(s)" may comprise a single substance or may comprise a beverage composition comprising two or more substances. Unless explicitly required by the context, references to "beverage ingredient" in the singular are intended to include the plural and *vice versa.*

The first filter may comprise a first filter wall and the second filter may comprise a second filter wall.

The first filter and the second filter may each comprise a rigid element having a plurality of filtering apertures located therein.

The first filter extends around the second filter.

The first filter and the second filter may be arranged concentrically.

The first filter may comprise a first tubular member having a plurality of first filtering apertures located therein and the second filter may comprise a second tubular member having a plurality of second filtering apertures located therein. The second tubular member may be arranged within the first tubular member.

The cartridge may further comprise a discharge spout for channelling the beverage, in use, towards an outlet of the cartridge. The first and second filters may be arranged around the discharge spout. A flow direction, in use, of the beverage flowing from the second filter to the flow constriction may be opposed to a flow direction, in use, of the beverage flowing out of the discharge spout.

An inlet of the cartridge may be provided, or formed in use, at or near a periphery of the capsule.

The cartridge may be configured to direct the aqueous medium entering the beverage ingredient chamber to circulate around the first filter.

The beverage ingredient chamber may be annular, with the first filter forming at least a part of an inner surface of the annular beverage ingredient chamber. The body of the cartridge may be configured to direct the aqueous medium entering the beverage ingredient chamber at an angle greater than 45°, preferably at 90° from a radial direction of the annular beverage ingredient chamber such that the aqueous medium is caused to circulate around the annular beverage ingredient chamber. One or more than one angled inlet may be provided to the annular beverage ingredient chamber.

The local bed thickness of the beverage ingredient may be 1.5 to 2.2 times the local bed width of the beverage ingredient, more preferably approximately 2 times the local bed width of the beverage ingredient.

An outlet of the cartridge may be provided, or formed in use, at or near a centre of the capsule.

The cartridge may be disc-shaped.

An inlet of the cartridge may be provided, or formed in use, and an outlet of the cartridge may be provided, or formed in use on a same surface of the cartridge. The same surface may be a lower surface of the cartridge when held in a beverage preparation machine ready for dispensation.

The first filter may comprise a plurality of first filtering apertures and the second filter may comprise a plurality of second filtering apertures and wherein a critical dimension of the first filtering apertures may be larger than a critical dimension of the second filtering apertures.

The first filter and/or the second filter may comprise filtering apertures in the form of elongated slots formed respectively in a rigid, otherwise impermeable, wall element. The elongated slots may extend from a free edge of the respective wall element.

The body may comprise a cup-shaped member housing the first filter and the second filter, an open mouth of the cup-shaped housing being sealed by a lid.

The first filter and/or the second filter may comprise filtering apertures in the form of elongated slots formed respectively in a rigid, otherwise impermeable, wall element, wherein the elongated slots extend into contact with the lid.

The first filter and the second filter may form a part of an inner member located within the cup-shaped member. The first filter and the second filter may be formed as a unitary moulding of a polymeric material.

The flow constriction downstream of the second filter may be sized and/or shaped to produce a jet of beverage as the beverage passes there through.

The cartridge may further comprise an air inlet aperture located in the vicinity of the flow constriction and downstream thereof, such that the jet of beverage passes over the air inlet aperture.

The cartridge may further comprise:
- a second flow constriction downstream of the filter,
wherein the cartridge comprises a first flow path from the second filter to the first flow constriction and a second flow path from the second filter to the second flow constriction,
wherein the first and second flow constrictions are configured such that, in use, a first beverage jet emanates from the first flow constriction and a second beverage jet emanates from the second flow constriction, and the first and second flow constrictions are configured so that the first and second beverage jets collide.

The first and second flow constrictions may be located opposite one another such that the first and second beverage jets impact one another substantially head-on.

An air inlet aperture may be located in the vicinity of each flow constriction and downstream thereof, such that the jets of beverage each pass over an air inlet aperture.

In a second aspect of the present disclosure there is provided a cartridge for preparation of a beverage, the cartridge being sealed prior to use and containing one or more beverage ingredients, the cartridge being suitable to receive in use an aqueous medium which may be brought into contact with the one or more beverage ingredients to produce a beverage which may be output from the cartridge,
the cartridge comprising:
- a body defining a beverage ingredient chamber containing the one or more beverage ingredients;
- a filter defining an exit from the beverage ingredient chamber; and
- a first and a second flow constriction downstream of the filter,
wherein the cartridge comprises a first flow path from the filter to the first flow constriction and a second flow path from the filter to the second flow constriction,
wherein the first and second flow constrictions are configured such that, in use, a first beverage jet emanates from the first flow constriction and a second beverage jet emanates from the second flow constriction, and the first and second flow constrictions are configured so that the first and second beverage jets collide.

The first and second flow constrictions may be located opposite one another such that the first and second beverage jets impact one another substantially head-on.

An air inlet aperture may be located in the vicinity of each flow constriction and downstream thereof, such that the jets of beverage each pass over an air inlet aperture.

The filter may comprise a filter wall.

The filter may comprise a rigid element having a plurality of filtering apertures located therein.

The filter may comprise a tubular member having a plurality of filtering apertures located therein.

The cartridge may further comprise a discharge spout for channelling the beverage, in use, towards an outlet of the cartridge.

The filter may be arranged around the discharge spout.

A flow direction, in use, of the beverage flowing from the filter to the flow constriction may be opposed to a flow direction, in use, of the beverage flowing out of the discharge spout.

An inlet of the cartridge may be provided, or formed in use, at or near a periphery of the capsule.

The cartridge may be configured to direct the aqueous medium entering the beverage ingredient chamber to circulate around the filter.

The beverage ingredient chamber may be annular, with the filter forming at least a part of an inner surface of the annular beverage ingredient chamber.

The body of the cartridge may be configured to direct the aqueous medium entering the beverage ingredient chamber at an angle greater than 45°, preferably at 90° from a radial direction of the annular beverage ingredient chamber such that the aqueous medium is caused to circulate around the annular beverage ingredient chamber. One or more than one angled inlet may be provided to the annular beverage ingredient chamber.

The local bed thickness of the beverage ingredient may be 1.5 to 2.2 times the local bed width of the beverage ingredient, more preferably approximately 2 times the local bed width of the beverage ingredient.

An outlet of the cartridge may be provided, or formed in use, at or near a centre of the capsule.

The cartridge may be disc-shaped.

An inlet of the cartridge may be provided, or formed in use, and an outlet of the cartridge may be provided, or formed in use on a same surface of the cartridge. The same surface may be a lower surface of the cartridge when held in a beverage preparation machine ready for dispensation.

The filter may comprise filtering apertures in the form of elongated slots formed in a rigid, otherwise impermeable, wall element.

The elongated slots may extend from a free edge of the wall element.

The body may comprise a cup-shaped member housing the filter, an open mouth of the cup-shaped housing being sealed by a lid.

The filter may comprise filtering apertures in the form of elongated slots formed in a rigid, otherwise impermeable, wall element, wherein the elongated slots extend into contact with the lid.

The filter may form a part of an inner member located within the cup-shaped member.

The filter may be formed as a unitary moulding of a polymeric material.

In any of the aspects of the present disclosure, the first filter may comprise a plurality of first filtering apertures and the second filter, where present, may comprise a plurality of second filtering apertures and wherein a critical dimension (being the smallest dimension, for example the width) of the first and/or second filtering apertures may be 0.4 to 0.6 mm, preferably 0.5mm.

In any of the aspects of the present disclosure, the cartridge may be disc-shaped having a central longitudinal axis, wherein an outlet of the cartridge may be orientated to output, in use, the beverage substantially in a direction parallel to the longitudinal axis, and wherein the first filter and the second filter may be orientated such that beverage passing through the first filter and the second filter flows between the first filter and the second filter in a direction substantially perpendicular to the longitudinal axis.

In any of the aspects of the present disclosure, the one or more beverage ingredients may comprise one or more soluble beverage ingredients. The one or more beverage ingredients may comprise one or more powdered beverage ingredients. The one or more beverage ingredients may comprise insoluble- or reduced solubility-ingredients, for example, cocoa particles.

Further aspects of the present disclosure will now be set out that can be applied to either the first or second aspects described above, singly or in combination, or alternatively to other cartridges that may not necessarily have all of the features of either the first or second aspect.

In a further aspect of the present disclosure, a conduit upstream of the or each flow constriction may be configured to prevent deposition of undissolved or partially dissolved beverage ingredient. This configuration may comprise shaping the conduit upstream of each flow constriction, in particular the portion of the conduit immediately upstream of the flow constriction, to be smooth so as to have no dead spaces, sharp corners or sudden changes in concavity.

In a further aspect of the present disclosure, the beverage ingredient chamber may comprise one or more partition elements which act to demarcate two or more zones within the beverage ingredient chamber, each of which contain the one or more beverage ingredients. Preferably, the one or more partition elements extend from the first filter towards the body of the cartridge. The one or more partitions may be planar and may be orientated radially within the body. Alternatively, the one or more partitions may be curved.

The one or more partition elements may extend from a centrally-located first filter into contact with a surrounding wall of the body so as to fully separate zones, one from the other, within the beverage ingredient chamber. Each, separate, zone will comprise at least one inlet permitting entry of the aqueous medium into the zone and at least a portion of the first filter permitting exit of beverage from the zone.

In one example, four partitions are provided.

Advantageously, separating the beverage ingredient chamber into two or more zones may produce better dissolution of the one or more beverage ingredients by focussing the mixing of the aqueous medium and the beverage ingredients in key areas and providing alternative flow patterns.

In a further aspect of the present disclosure, a flow path from the filter(s) to the flow constriction(s) may be configured to be spiral in shape. For example, spiral ramp elements may be located within an annular space between the terminal filter (the second filter where present, or the first filter where only one filter is provided) and a cylindrical tube, wherein the beverage is forced to flow through the annular space on the way to the flow constriction(s). The spiral ramp elements cause the beverage to spiral around the cylindrical tube creating additional mixing vortices and swirl within the beverage. Advantageously, this flow pattern can help to break up small, partially wetted clumps of beverage ingredient which may have managed to pass the filter(s). Additional obstructions, for example, ribs, corners, etc. can be provided on the spiral ramp elements to aid break-up of clumps.

In a further aspect of the present disclosure, the beverage ingredient chamber may contain a plurality of bristles. The bristles advantageously can act to disrupt the flow path with the beverage ingredient chamber to promote turbulence and better mixing of the one or more beverage ingredients: The bristles may be arranged around, and spaced from, the first filter. The bristles may comprise elongate plastic pins. Tne bristles may extend the full height of the beverage ingredient chamber. The bristles may be formed unitarily as part of an inner member also comprising the first filter received within the body.

In a further aspect of the present disclosure, the body defining the beverage ingredient chamber may have one or more lobes as part of an outer side wall of the beverage ingredient chamber. The one or more lobes may be smoothly, convexly curved (when viewed from a centre-point of the cartridge). A lobe may be provided between pairs of inlet apertures to the beverage ingredient chamber. Advantageously, the one or more lobes can improve dissolution of the one or more beverage ingredients by first, confining the incoming aqueous medium to a smaller cross-sectional flow area leading to improved shear forces and higher flow velocities which improve dissolution. Secondly, the one or more lobes, when positioned between pairs of inlet apertures, tend to decrease the amount of 'dead space' in the beverage ingredient chamber. By 'dead space' is meant that part or parts of the volume of the beverage ingredient chamber where circulating flow of the aqueous medium and/or beverage tends not to reach. For example, with an annular beverage ingredient chamber having four equi-spaced radially-directed inlet apertures at, say, 0°, 90°, 180° and 270° it has been found that the locations by the side wall at 45°, 135°, 225° and 315° tend to be 'dead spaces' which tend not to be reached by circulating flow.

In a further aspect of the present disclosure, the beverage ingredient chamber may comprise two or more separate chambers each of which hold a different beverage ingredient(s). For example, a first chamber may hold sugar or a sugar-containing beverage ingredient(s) and a second chamber may hold a chocolate-containing beverage ingredient(s). Each, separate, chamber will comprise at least one inlet permitting entry of the aqueous medium into the chamber and at least a portion of the first filter permitting exit of beverage from the chamber. Advantageously, such an arrangement can be used to tailor the size and number of inlet apertures and the size and number of filtering apertures to each beverage ingredient(s).

In a further aspect of the present disclosure, the beverage ingredient chamber may comprise a dedicated flow-conditioning chamber which receives incoming aqueous medium in a first condition and discharges the aqueous medium into a remainder of the beverage ingredient chamber in a second condition. The first and second conditions may include one or more of: first and second flow velocities, first and second flow directions, and first and second flow compositions (i.e. the composition of the flow in terms of the relative quantities of water, dissolved beverage ingredient(s) and/or undissolved beverage ingredient(s) at that location). For example, the flow-conditioning chamber may comprise an angled wall to condition an incoming aqueous medium that has a first condition of a relatively low flow velocity, a radial flow direction and a composition of pure water into a second condition of a flow having a relatively high flow velocity, a tangential flow direction and a composition of water mixed with one or more beverage ingredients.

In a further aspect of the present disclosure, the beverage ingredient chamber may comprise a plate member which initially rests on a bed of the one or more beverage ingredients. The use of the plate member finds particular application where the inlet(s) to the beverage ingredient chamber are located at or towards a bottom of the beverage ingredient chamber. In use, as the one or more beverage ingredients is incrementally dissolved away beneath the plate member the weight of the plate member (which may be freely movable within the beverage ingredient chamber) forces undissolved beverage ingredient higher up in the beverage ingredient chamber downwards into the path of the incoming aqueous medium. The plate member may comprise apertures to allow for circulation of aqueous medium and/or beverage above and below the plate member in use.

In a further aspect of the present disclosure, the beverage ingredient chamber may contain a rotatable mixer blade assembly. The rotatable mixer blade assembly may comprise one or more vanes or blades which act to break up agglomerations of powdered beverage ingredient as the rotatable mixer blade assembly rotates within the beverage ingredient chamber.

In a further aspect of the present disclosure, the beverage ingredient chamber may comprise one or more baffles orientated to induce vertical vortices within the beverage ingredient chamber.

In any of the above embodiments or aspects the first filter may comprise a plurality of first filtering apertures and the second filter, where present, may comprise a plurality of second filtering apertures and wherein a critical dimension (being the smallest dimension, for example the width) of the first and/or second filtering apertures may be 0.4 to 0.6 mm, preferably 0.5mm.

### Brief Description of the Drawings

Embodiments of the present disclosure will now be described, by way of example only, with reference to the accompanying drawings, in which:
Figure 1 is a perspective view of a first embodiment of cartridge according to the present disclosure with a sealing laminate omitted to show internal detail;
Figure 2 is a perspective view of an inner member of the cartridge of Figure 1;
Figure 3 is a perspective view of the inner member of Figure 2 from another angle;
Figure 3a is an enlarged view of a portion of Figure 3;
Figure 4 is a cross-sectional view of the inner member of Figure 2;
Figure 5 is a plan view of the cartridge of Figure 1;
Figure 6 is a cross-sectional view of the cartridge of Figure 1 with the sealing laminate attached;
Figure 7 is a perspective view of an alternative inner member for use in the cartridge of Figure 1;
Figure 8 is a cross-sectional view of the inner member of Figure 7;
Figure 9 is a perspective view of a further embodiment of a cartridge according to the present disclosure with a sealing laminate omitted to show internal detail;
Figure 10 is a perspective view of an inner member of the cartridge of Figure 9;
Figure 11 is a plan view of the cartridge of Figure 9;
Figure 12 is a perspective view of a comparative cartridge; and
Figure 13 is a perspective view of another example cartridge of the present disclosure;
Figures 14 to 32 show views of cartridges embodying further aspects of the present disclosure.

### Detailed description

In the following description, the disclosure will be illustrated by way of example with reference to a cartridge for forming a beverage (otherwise known as a beverage capsule), in particular, a cartridge that is a sealed, machine-insertable cartridge that can be used with a beverage preparation system for dispensing one of a range of beverage types on demand, preferably in a domestic setting.

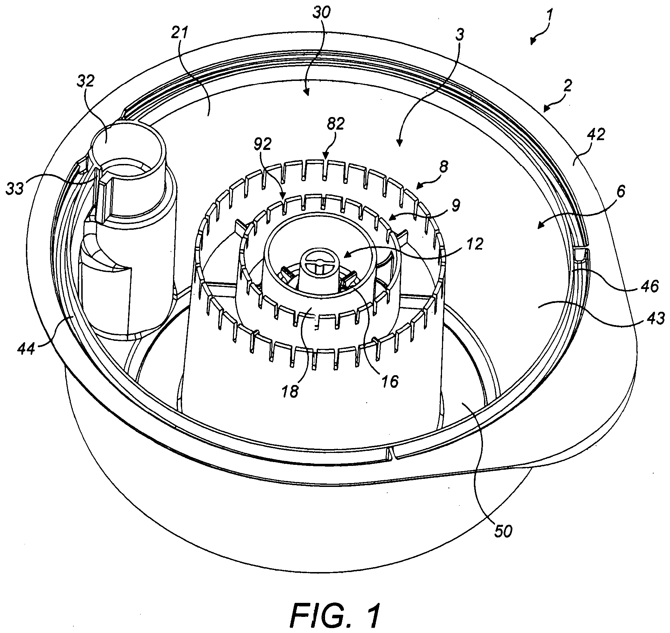

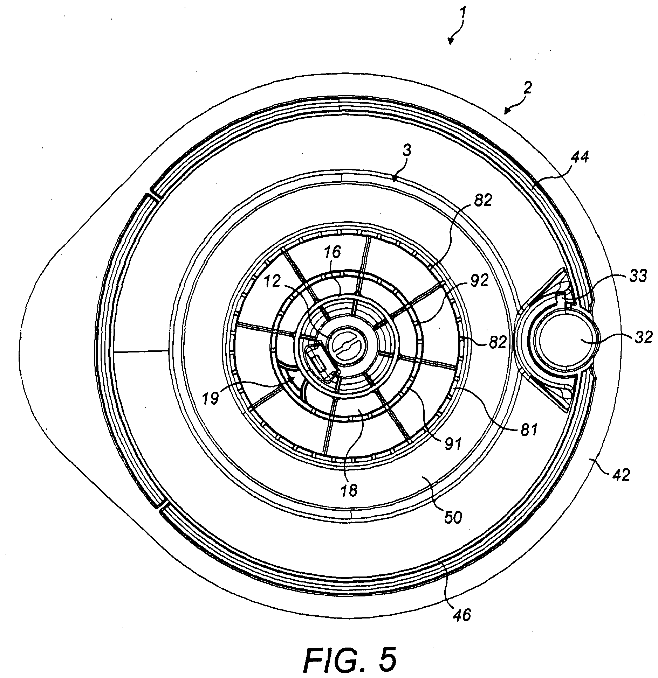

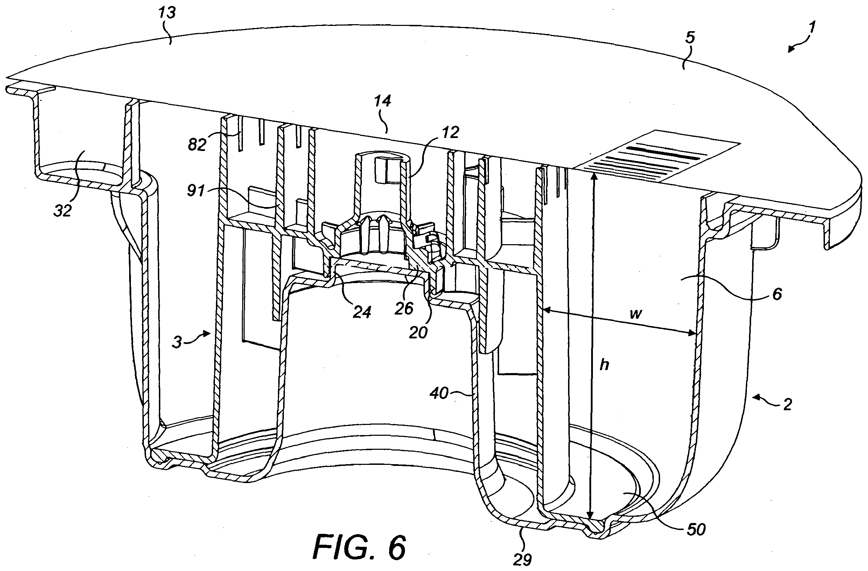

Figures 1 to 6 show a first embodiment of cartridge 1 according to the present disclosure. For clarity, cartridge 1 is illustrated containing no beverage ingredient so that features of the cartridge 1 may be more easily seen. However, prior to use, and during assembly, the cartridge 1 would receive one or more beverage ingredients therein and then be sealed by means of a lid 5 as will be described below, and as shown in Figure 6.

The cartridge 1 generally comprises a body 2, an inner member 3 and the lid 5. The body 2, inner member 3 and lid 5 are assembled to form the cartridge 1.

The body 2 may generally comprise a cup-shaped member defining a beverage ingredient chamber 6 within an interior thereof The body 2 may have a curved side wall 21, a closed top 29 and an open bottom 30 defining an open mouth of the body 2 which is surrounded by a rim 46 and a flange 42 which extends radially outwards from the rim 46. In addition, the body 2 may further define an optional annular void space 44 between an interior wall 43 of the container and the flange 42. In this case, a free edge of the interior wall 43 may define the rim 46. The closed top 29 of the body 2 may comprise, as shown in Figure 6, a centrally-located cylindrical bore 40 that forms a depression in the outer surface of the body 2. A closed end of the cylindrical bore 40 may comprise a cylindrical extension 24 of narrower diameter compared to the cylindrical bore 40, the function of which will be described further below.

The cartridge 1 further comprises an inlet point 13 and an outlet point 14 as shown in Figure 6. The inlet point 13 and the outlet point 14 define the location of an inlet for aqueous medium, such as water, to enter in use the cartridge 1 and the location of an outlet for beverage to leave the cartridge 1 during dispensation. Preferably the inlet and outlet are initially sealed by the lid 5 such that the inlet point 13 and outlet point 14 are simply predetermined areas of the lid 5 to be pierced, cut or otherwise opened in use. Alternative forms of inlet and outlet may be provided, for example, in the form of valve elements or tear-off elements that can be removed manually or by the beverage preparation machine.

The body 2 of cartridge 1 may be generally circular or disc-shaped, with a diameter of the cartridge 1 being greater than its height. Typically the overall diameter of the body 2 is 74.5 mm ±6mm and the overall height is 29 mm ±3 mm. Typically, the internal volume of the cartridge 1 able to receive beverage ingredient(s) when assembled is a maximum of 55 ml (although it is not required that the internal volume is filled to capacity with beverage ingredient(s)). The diameter of the body 2 may be smaller at the closed top 29 compared to the diameter at the bottom 30, resulting from a flaring of the curved side wall 21 from the closed top 29 to the bottom 30.

The body 2 may comprise an inlet chamber 32 adjacent to the curved side wall 21 aligned with the inlet point 13. The inlet chamber 32 comprises a cylindrical wall structure having a jetting slot 33 at one side configured to jet, in use, the aqueous medium entering the inlet chamber 32 from the inlet point 13 into the beverage ingredient chamber 6 such that the aqueous medium circulates energetically around the beverage ingredient chamber 6. The jetting slot 33 may be an elongated slot or slit. Preferably, the jetting slot 33 is orientated so that the aqueous medium enters the beverage ingredient chamber 6 at an angle greater than 45°, preferably at 90°, from a radial direction of the beverage ingredient chamber 6.

The inner member 3 is located within the body 2. The inner member 3 is connected to the body 2 and comprises a mounting flange 50, a first filter 8, a second filter 9, a flow constriction and a discharge spout 12. The inner member 3 may be located centrally within the body 2 so that a central axis of the inner member 3 is coincident with and aligned to a central axis of the body 2. The mounting flange 50 may be connected to an inner surface of the closed top 29 of the body 2, for example by ultrasonic welding. On assembly, the inner member 3 spans between the closed top 29 of the body 2 and the lid 5, as shown in Figure 6. The lid 5 is sealed to distal rims of the inner member 3 as well as the body 2 as will be described below.

With the inner member 3 in position within the body 2, the beverage ingredient chamber 6, which holds the beverage ingredient prior to dispensation, takes the form of an annular chamber extending between the curved side wall 21 of the body 2 and the inner member 3.

The inner member 3 may be formed as a single integral moulding.

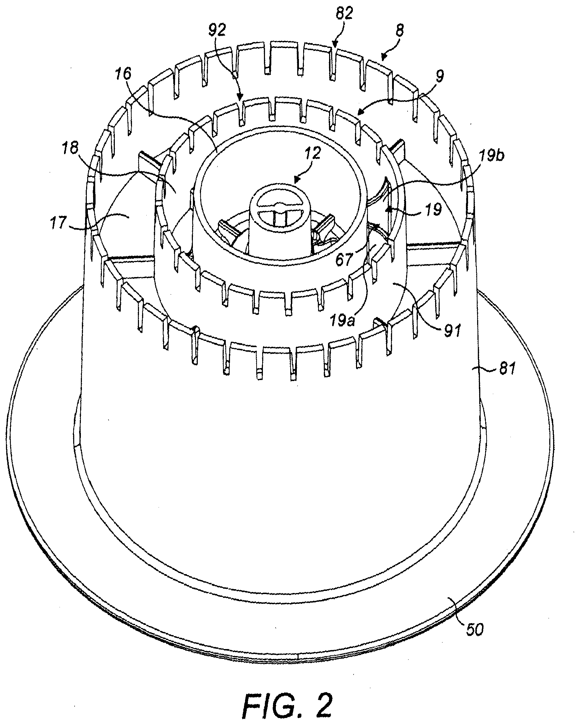

As shown in Figures 2 to 4, the first filter 8 may take the form of a tubular member that extends from the mounting flange 50 and defines a first cylindrical filter wall 81 that forms an outer surface of the inner member 3. The first cylindrical filter wall 81 is provided at a distal end from the mounting flange 50 with a plurality of first filtering apertures 82.

The second filter 9 is arranged within the first cylindrical filter wall 81 and takes the form of a second cylindrical filter wall 91. The second cylindrical filter wall 91 extends from a transverse connecting flange 17 that joins the second cylindrical filter wall 91 to the first cylindrical filter wall 81. The second cylindrical filter wall 91 is provided at a distal end from the mounting flange 50 with a plurality of second filtering apertures 92.

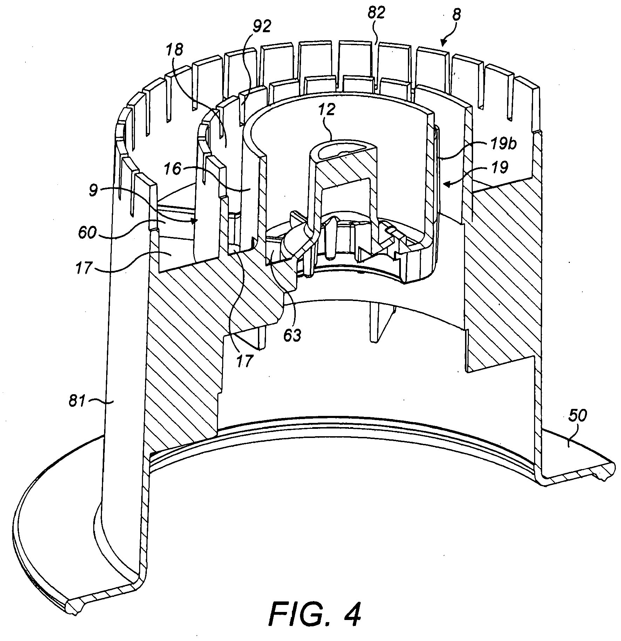

As shown in Figure 4, the transverse connecting flange 17 may be provided with a plurality of radial stiffening ribs 60 on its lower face which extend between the first cylindrical filter wall 81 and the second cylindrical filter wall 91. In addition, further radially inwards, the transverse connecting flange 17 may be provided with a plurality of radial stiffening ribs 62 on its lower face which extend between the second cylindrical filter wall 91 and a cylindrical tube 16 which surrounds the discharge spout 12. Further, radially inwards, the transverse connecting flange 17 may be provided with a plurality of radial stiffening ribs 63 on its lower face which extend between the cylindrical tube 16 and a base of the discharge spout 12.

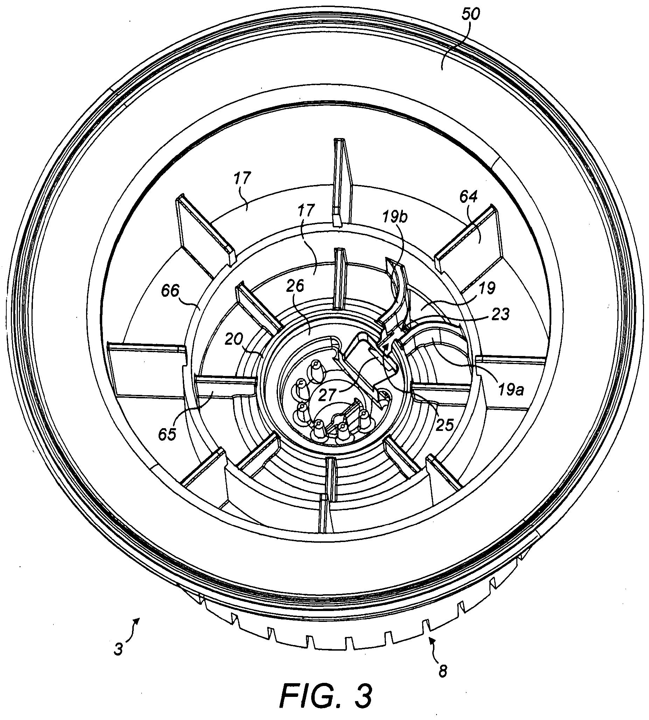

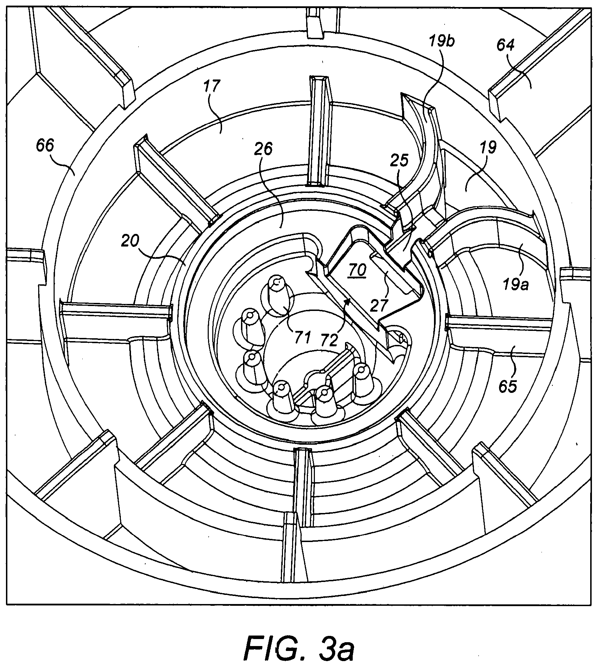

As shown in Figures 3 and 3a, the transverse connecting flange 17 may also be provided with a plurality of radial stiffening ribs 64 on its upper face which extend between the first cylindrical filter wall 81 and a cylindrical wall 66 which is aligned with the second cylindrical filter wall 91 but extends upwardly from the transverse connecting flange 17 in the opposite direction from the direction of the second cylindrical filter wall 91. In other words the cylindrical wall 66 and the second cylindrical filter wall 91 lie on opposite sides of the transverse connecting flange 17.

In addition, further radially inwards, the transverse connecting flange 17 may be provided with a plurality of radial stiffening ribs 65 on its upper face which extend between the cylindrical wall 66 and cylindrical rim 20 which surrounds an upper end of the discharge spout 12.

The first filtering apertures 82 and the second filtering apertures 92 are preferably formed as slots that are relatively thin in a circumferential direction of the first cylindrical filter wall 81 and second cylindrical filter wall 91 and relatively long in a longitudinal direction thereof. The slots may be configured to filter out beverage ingredient particles having a dimension of at least 0.5mm, preferably in the range 0.5-2mm. A critical dimension (being the smallest dimension, for example the width) of the slots of the first cylindrical filter wall 81 and second cylindrical filter wall 91 may be 0.4 to 0.6 mm, preferably 0.5mm, in order to capture the larger particles but allow flow of the beverage out of the beverage ingredient chamber 6 without an unwanted substantial increase in back-pressure. The slots may extend from a free edge (i.e. the rim) of each of the first cylindrical filter wall 81 and second cylindrical filter wall 91. The slots in the first cylindrical filter wall 81 may be 3.0 mm long. The slots in the second cylindrical filter wall 91 may be 1.8 mm long.

The first filter 8 and second filter 9 may each be formed from a rigid, impermeable material, such as a plastics material, such that none of the beverage, aqueous medium or beverage ingredient may pass through the first filter 8 and second filter 9 except through the first filtering apertures 82 and second filtering apertures 92.

As shown in Figure 2, the second cylindrical filter wall 91 is arranged within the first cylindrical filter wall 81. The second filter 9 is in this way arranged downstream of, and spaced apart from, the first filter 8 even though the first filter 8 and second filter 9 may both be formed as integral parts of the inner member 3. The first cylindrical filter wall 81 and second cylindrical filter wall 91 may be arranged concentrically with one another and also be centred on the central axis of the body 2 when assembled.

The discharge spout 12 of the inner member 3 is arranged for channelling the beverage towards the outlet point 14 of the cartridge 1. As illustrated in Figure 6, the outlet point 14 may be provided at or near the central axis of the cartridge 1. The discharge spout 12 may be surrounded by the cylindrical tube 16 which extends part-way along the length of the inner member 3 from the transverse connecting flange 17. The discharge spout 12 and cylindrical tube 16 may be arranged concentrically within the second cylindrical filter wall 91. Thus, preferably all of the first cylindrical filter wall 81, second cylindrical filter wall 91, cylindrical tube 16 and discharge spout 12 are arranged concentrically to one another and centred on the central axis of the cartridge 1.

An annular space 18 is defined between an inner face of the second cylindrical filter wall 91 and an outer face of the cylindrical tube 16. The cylindrical tube 16 is not provided with any openings and does not allow passage of fluid across its wall. Instead, fluid communication between the annular space 18 and the discharge spout 12 is provided by a channel 19 as shown in Figures 3 to 5. The channel 19 defines a passage, akin to a chimney, extending parallel to the central axis of the cartridge 1 from the vicinity of the second filtering apertures 92 and through the transverse connecting flange 17. The channel 19 is defined by two curved walls 19a and 19b that extend, on the lower side of the transverse connecting flange 17, between the second cylindrical filter wall 91 and the cylindrical tube 16 and extend, on the upper side of the transverse connecting flange 17, between the cylindrical wall 66 and the cylindrical rim 20. The lower end of the two curved walls 19a and 19b stops short of the rims of the second cylindrical filter wall 91 and the cylindrical tube 16 so as to form an entry point 67 of the channel 19. An exit point of the channel 19 at the upper end of the channel 19 is in fluid communication with the flow constriction as will be described further below.

The cartridge 1 may be provided with means for entraining air into the beverage, for example in the form of an eductor. As used herein, the term eductor refers to the use of a flow constriction in the form of an aperture, or similar structure, to form a jet of beverage, the aperture being located in the beverage flow path upstream of an air inlet 27 and an expansion chamber, said aperture being arranged to produce a jet of beverage which jets into the expansion chamber to produce a low pressure zone in the vicinity of the air inlet 27 which causes air to be drawn through the air inlet 27 and to become entrained in the beverage stream as a plurality of bubbles.

In the first embodiment of Figures 1 to 6, the flow constriction is arranged downstream of the second filter 9, that is downstream of the second cylindrical filter wall 91. As shown in Figures 3, 3a and 6, the cylindrical rim 20 surrounds an inlet to the discharge spout 12. An inwardly directed shoulder 26 is provided immediately within the cylindrical rim 20. At one point around the circumference of the cylindrical rim 20 a slot 25 is provided, the slot 25 extending from an upper edge of the cylindrical rim 20 to a point marginally below the level of the inwardly directed shoulder 26. As shown in Figure 6, when the cartridge 1 is assembled, the cylindrical extension 24 of the body 2 is seated within the cylindrical rim 20 and rests against the inwardly directed shoulder 26. The cylindrical extension 24 substantially closes off the inlet of the discharge spout 12 including closing off the upper end of the slot 25. Because the slot 25 in the cylindrical rim 20 extends below the level of the inwardly directed shoulder 26, the aperture for forming a jet of beverage remains open to provide a fluid path through the cylindrical rim 20. Thus on assembly, the slot 25 together with the body 2 define the flow constriction in the form of the resulting aperture. The resulting aperture may be of dimension 0.65mm x 1.00mm with a cross-sectional area of 0.65mm².

Preferably, the location of the slot 25 is aligned with the exit point of the channel 19 as shown in Figure 3a.

As shown in Figure 3a, the air inlet 27 is located immediately downstream of the aperture resulting from partial closure of the slot 25. The air inlet 27 may comprise a round hole, but in the illustrated embodiment comprises an elongated slot that extends through the transverse connecting flange 17 so as to provide gas communication between a point above the transverse connecting flange 17 within an upper part of the discharge spout 12 and a void space below the transverse connecting flange 17 between the cylindrical tube 16 and the discharge spout 12. Preferably, the air inlet 27 is circumferentially aligned with the slot 25. The air inlet 27 is provided within a tapered channel 70 formed in line with the slot 25. The tapered channel 70 comprises a floor and two side walls that converge towards a lip 72. The air inlet 27 may be located towards a root of the tapered channel 70 adjacent the cylindrical rim 20.

The upper end of the discharge spout 12 may also be provided with a plurality of upstanding projections 71 which extend upwards from the transverse connecting flange 17 and surround a mouth of the exit bore of the discharge spout 12.

The diameter of the first cylindrical filter wall 81 may be relatively large compared to the internal diameter of the beverage ingredient chamber 6. For example, the diameter of the first cylindrical filter wall 81 may be 29 mm and the maximum internal diameter of the beverage ingredient chamber 6 may be 57 mm. Therefore, each side of the resultant annular beverage ingredient chamber 6, as shown in Figure 6, has a width, w, of 14 mm and a height, *h,* of 29 mm. Thus a void space is provided that allows beverage ingredient(s) to be filled into the cartridge 1 where the local bed thickness of the beverage ingredient(s) is approximately 2 times the local bed width of the beverage ingredient(s).

The lid 5 may be formed from a composite material. The composite material may comprise an aluminium layer. The composite material may comprise one or more polymer layers, for example a polypropylene layer and/or a polyethylene terephthalate (PET) layer.

When sealed to the body 2, the lid 5 forms a seal with the flange 42 of the body 2 and also a rim of the inlet chamber 32. In addition, the lid 5 is sealed to the distal end of the inner member 3, namely the rims formed by the free edges of the first cylindrical filter wall 81, the second cylindrical filter wall 91 and the cylindrical tube 16.

The cartridge 1 may contain one or more beverage ingredients in the beverage ingredient chamber 6. The cartridge 1 of the present disclosure finds particular application where the one or move beverage ingredients are one or more soluble beverage ingredients. For example, the one or more beverage ingredients may comprise one or more powdered beverage ingredients. The one or more beverage ingredients may comprise insoluble- or reduced solubility-particles, for example, cocoa powder or powder mixes containing coarsely ground spices (e.g. cinnamon). A non-exhaustive list of example beverage ingredients includes chocolate powder, milk powder, creamers, soluble coffee, fruit and vegetable powders, flavourings, herbs and partially/coarsely ground spices including but not limited to cinnamon, ginger, cardamom, etc.

In use, the sealed cartridge 1 is inserted in, or otherwise coupled to, a beverage preparation machine in order to dispense a beverage (or beverage part) from the cartridge 1. During operation of the dispensation cycle an inlet is formed at the inlet point 13 and an outlet is formed at the outlet point 14, for example, by piercing of the lid 5 by elements of the beverage preparation machine. A beverage flow path can then be defined linking the inlet point 13 to the outlet point 14 along which an aqueous fluid, which will be exemplified in the following as hot water, can pass. The beverage flow path is defined by spatial inter-relationships between the body 2, the inner member 3 and the lid 5.

The beverage flow path passes, in order, from the inlet point 13, through the inlet chamber 32, out of the jetting slot 33, around the annular beverage ingredient chamber 6, through the first filtering apertures 82 of the first cylindrical filter wall 81, through the second filtering apertures 92 of the second cylindrical filter wall 91, into the annular space 18, into and up the channel 19, through the aperture of the eductor, over the air inlet 27 of the eductor, into the discharge spout 12 and finally arrives at the outlet point 14. From the outlet at the outlet point 14 the beverage may be discharged into a suitable receptacle.

The orientation of the jetting slot 33 causes the hot water entering the annular beverage ingredient chamber 6 to swirl and circulate around the inner member 3, potentially a large number of times. In so doing the hot water is better able to dissolve the soluble beverage ingredients. In particular the energetic nature of the jet of hot water from the jetting slot 33 and the circulation of the hot water around the full circumference of the annular beverage ingredient chamber 6 helps to break up any agglomerations of soluble beverage ingredient within the cartridge 1. Further, whilst not wishing to be bound by theory, the configuration wherein the local bed thickness of the beverage ingredient is 1.5 to 2.2 times the local bed width of the beverage ingredient, is believed to assist with the break-up of agglomerations of soluble beverage ingredients by firstly, confining the circulating water to a relatively narrow annular volume which results in maintenance of higher water velocities within the beverage ingredient chamber 6 and, secondly, by providing a larger circumferential surface area of the beverage ingredient that can be directly exposed to the water.

Whilst not wishing to be bound by theory, the dispersion and dissolution of the soluble beverage ingredients is understood to be driven by the shear stress applied to break-up the wetted powder mass of the soluble beverage ingredients as it is contacted by the water. By use of the first cylindrical filter wall 81, which may be relatively large compared to the internal diameter of the beverage ingredient chamber 6, the shear rate of the water may be increased and thereby the shear stress applied to the wetted powder mass of the beverage ingredient mix can be increased leading to better dissolution of the soluble beverage ingredients. For a 3-2 mm² inlet area and operating at pressures from 0.6 to 1.2 bar the pump in a test system was found to give a flow rate of 5.5 to 3.6 ml/s into the inlet point 13. The velocity of the fluid, V, thru the inlet point 13 was in the range 0.9 to 1.8 m/s. Where the annular width of the beverage ingredient chamber is 9.5 mm, dividing the inlet velocity by this gap gives estimates of applied shear rates in the chamber of between 95 to 190 1/s.

The beverage thus formed from the hot water and the dissolved beverage ingredients is then able to pass out of the beverage ingredient chamber 6 through the first filtering apertures 82 of the first cylindrical filter wall 81 and then the spaced apart second filtering apertures 92 of the second cylindrical filter wall 91. The first and second filtering apertures 82, 92 act to filter out from the beverage any insoluble particles that may have been present in the beverage ingredients and also particles that have a reduced solubility such that for whatever reason the particles are not dissolved during the dispensation cycle.

Thus the first filter 8 defines an exit from the beverage ingredient chamber 6 and the second filter 9 forms a secondary filter which improves the filtering performance of the cartridge 1. The size of the second filtering apertures 92 may be smaller than the size of the first filtering apertures 82 so that the first filter 8 acts as a 'coarse' filter and the second filter 9 acts as a 'fine' filter.

By providing the first and second filtering apertures 82, 92 to be arranged around a major portion of the circumference, respectively, of the first and second cylindrical filtering walls 81, 91 dispensation performance of the cartridge 1 is maintained even as the first and second cylindrical filter walls 81, 91 retain and hold back particles on their upstream sides. This may be for two reasons. Firstly, the relatively large surface area of the first filter 8 and the second filter 9 (since they extend around a major portion of the circumference) means that even if some filtering apertures 82, 92 become blocked enough other filtering apertures 82, 92 are present to allow adequate through-flow of beverage without creating too high a level of back-pressure within the cartridge 1. Secondly, the cylindrical shape of, particularly, the first filter 8 means that there is a tendency for filtered particles held back by the first filtering apertures 82 to be 'washed off the first filter 8 by the circulating hot water/beverage mix within the annular beverage ingredient chamber 6 so that the filtered particles tend to get carried back into circulating fluid flow rather than remaining trapped against the first filtering apertures 82.

A particular advantage is that the first filter 8 and the second filter 9 prevent beverage ingredient particles larger than a desired predetermined size from reaching the flow constriction, preventing the flow constriction from becoming partially or totally blocked by such particles.

The back pressure of beverage collecting in the beverage ingredient chamber 6 forces the beverage under pressure through the first filter 8, the second filter 9, the annular space 18 and up the channel 19. The beverage then passes through the eductor. In so doing, the jet of beverage passes over the air inlet 27. As a result air is entrained into the beverage stream in the form of a multitude of small air bubbles as the air is drawn up through the air inlet 27. The jet of beverage issuing from the aperture turbulently flows within the upper part of the discharge spout 12 wherein collisions with the upstanding projections 71 help to modify the bubble size within the beverage. The beverage is then funnelled downwards along the exit bore of the discharge spout 12 to the outlet where the beverage is discharged into a receptacle such as a cup where the air bubbles form the desired frothy appearance.

Various modifications may be made to the cartridge 1 of the present disclosure as described above without departing from the scope of the present disclosure. In the following passages of the description a number of modifications and alternatives will be described that may be made singularly or in any combination unless the context explicitly states otherwise. In the following only the changes will be described in detail. In other respects the cartridges 1 are as described above. In the following description, like numbers are used for like features and components.

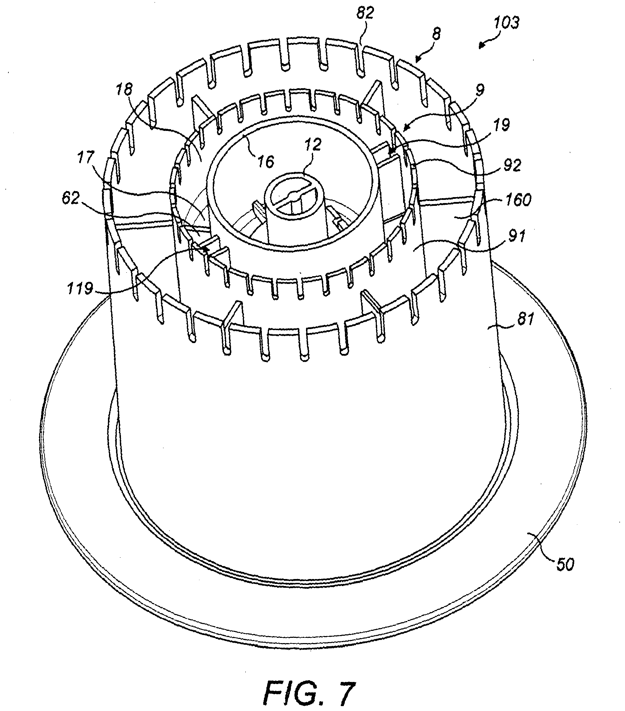

Figures 7 to 8 show an alternative form of inner member 103 that may be used with the body 2 as described above to form a further embodiment of cartridge 101. Inner member 103 is similar to the inner member 3 described above except in that it comprises a second flow constriction and a second air inlet 127 is provided in the transverse connecting flange 17. The second flow constriction and second air inlet 127 have the same form as the flow constriction and the air inlet 27. In each case the size of the resulting aperture of the eductor is half the size compared to the first embodiment - each aperture having a cross-sectional area of 0.65mm x 0.5mm = 0.33mm². Thus the combined open area of the two eductor apertures is the same as the open area of the single eductor aperture of the first embodiment.

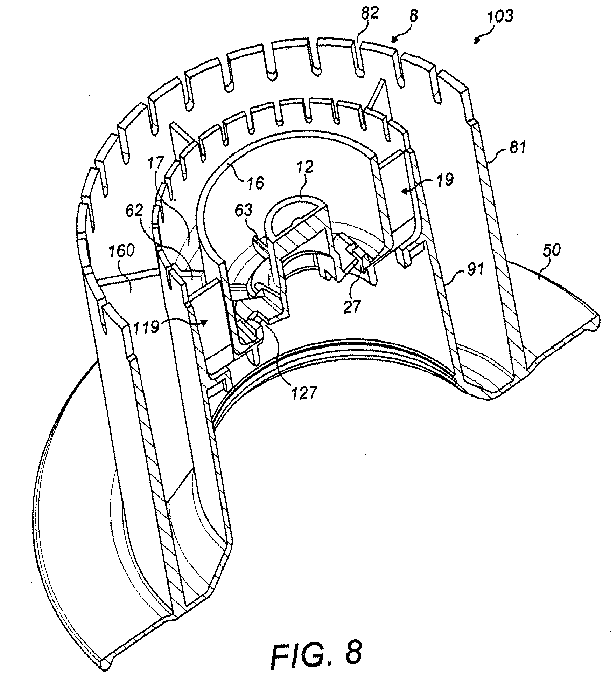

The second air inlet 127 is circumferentially aligned with the second flow constriction. In addition, the second air inlet 127 and second flow constriction are spaced from the air inlet 27 and the first flow constriction around the circumference of the annular flange 17. Preferably they may be located diametrically opposite the air inlet 27 and flow constriction 10 as shown in Figure 8.

Another difference is that the second cylindrical filter wall 91 extends directly from the mounting flange 50 rather than from the transverse connecting flange 17. Thus, the transverse connecting flange 17 in this embodiment only extends radially inwardly from the second cylindrical filter wall 91. As a consequence the radial stiffening ribs 160 between the first cylindrical filter wall 81 and the second cylindrical filter wall 91 are taller than in the first embodiment described above.

As well as the channel 19, a second channel 119 is provided to provide fluid communication between the annular space 18 and the discharge spout 12. The second flow constriction is arranged downstream of the second channel 119 such that two flow paths from the annular space 18 to the discharge spout 12 are defined, the first flow path passing through the channel 19 which now forms a first channel and first flow constriction and the second flow path passing through the second channel 119 and the second flow constriction.

Since the second flow constriction is spaced from the first flow constriction around the circumference of the annular flange 17 in use the jets of beverage emerging from the first flow constriction and second flow constriction collide in the upper part of the discharge spout 12, resulting in improved mixing and frothing of the beverage. In the preferred arrangement, where the two eductors are diametrically opposite one another, the jets of beverage impact one another substantially head-on. The inclusion of the second flow constriction has been found to result in reduced back pressure within the cartridge 101 in use.

In use, the back pressure of beverage collecting in the beverage ingredient chamber 6 forces the beverage under pressure through the first filter 8 and the second filter 9 as described above. The flow of beverage then separates into two flows the first flow passing through the first channel 19 and first flow constriction and the second flow path passing through the second channel 119 and the second flow constriction, emerging from each flow constriction as a jet into the upper end of the discharge spout 12. A first jet of beverage emerges from the first flow constriction and passes over air inlet 27. A second jet of beverage emerges from the second flow constriction and passes over the second air inlet 127. As a result air is entrained into both beverage streams in the form of a multitude of small air bubbles as the air is drawn up through the air inlets 27, 127. The two jets collide in the discharge spout 12 before being funnelled downwards to the outlet.

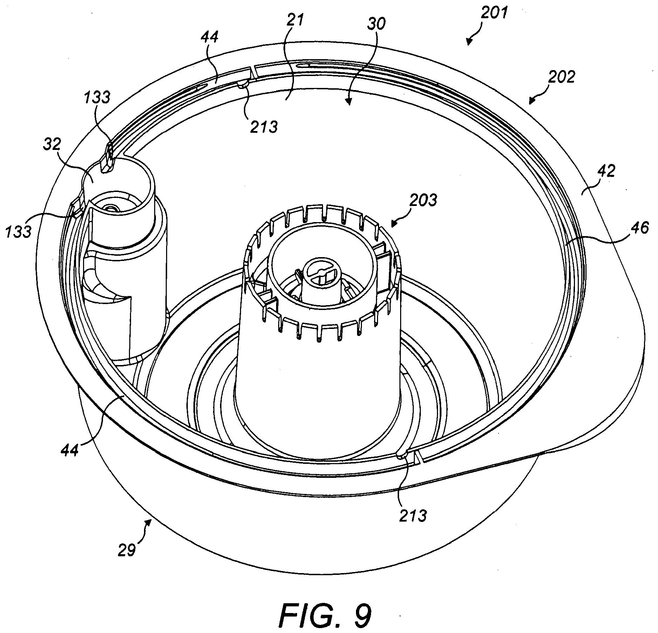

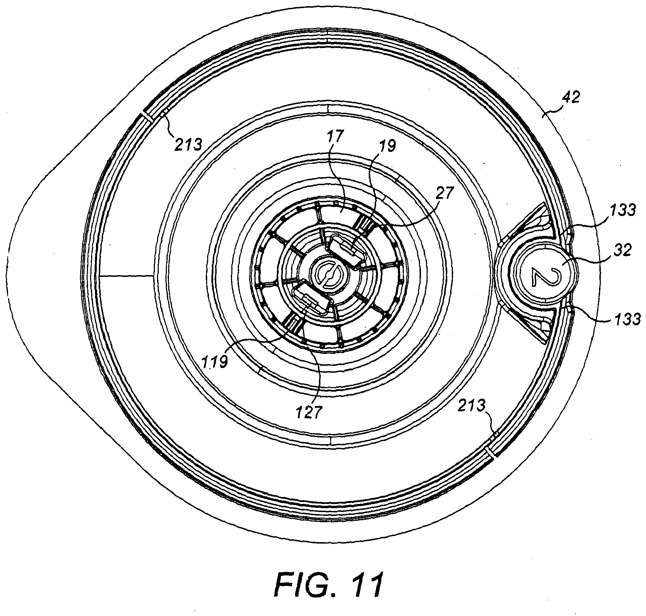

Figures 9 to 11 show another alternative form of inner member 203 that may be used with the body 2 described above or a modified body 202 described below to form a further embodiment of cartridge 201.

As before, the cartridge 201 comprises an inlet chamber 32. However, the inlet chamber 32 is not provided with a jetting slot 33 communicating directly with the beverage ingredient chamber 6. Rather, the inlet chamber 32 is provided with opposed slots 133 which communicate with the annular void space 44. In addition, the interior wall 43 is provided with a pair of inlets 213 arranged at opposite sides of the beverage ingredient chamber 6 as shown in Figure 9. The pair of inlets 213 may be diametrically opposite one another and may be in the form of small slots in the interior wall 43.

The cartridge 201 further comprises the alternative form of inner member 203. The inner member 203 comprises a filter 208, a first flow constriction, a second flow constriction, and a discharge spout 12. The filter 208 defines an exit from the beverage ingredient chamber 6. The filter 208 performs the same function as the first filter 8 described above. In this embodiment there is no second filter. The first flow constriction and second flow constriction are arranged downstream of the filter 208.

The filter 208 comprises a cylindrical filter wall 281 having a plurality of filtering apertures 282 located therein. The cylindrical filter wall 281 is in the form of a tubular member comprising the filtering apertures 282. The filtering apertures 282 are preferably formed as slots that are relatively thin in a circumferential direction of the cylindrical filter wall 281 and relatively long in a longitudinal direction thereof. The slots may be configured to filter out beverage ingredient particles having a dimension of at least 0.5mm, preferably in the range 0.5-2mm. A critical dimension (being the smallest dimension, for example the width) of the slots of the cylindrical filter wall 281 may be 0.4 to 0.6 mm, preferably 0.5mm, in order to capture the larger particles but allow flow of the beverage out of the beverage ingredient chamber 6 without an unwanted substantial increase in back-pressure. The slots may extend from a free edge (i.e. the rim) of the cylindrical filter wall 281. The slots in the cylindrical filter wall 281 may be 3.0 mm long.

The discharge spout 12 and cylindrical tube 16 of the inner member 203 are arranged within the cylindrical filter wall 281 and connected thereto by the transverse connecting flange 17 as before.

An annular space 218 is defined between an inner face of the cylindrical filter wall 281 and an outer face of the cylindrical tube 16. Fluid communication between the annular space 218 and the discharge spout 12 is provided by the channel 19 which now forms a first channel and a second channel 119 as in the embodiment described above. The arrangement of the first flow constriction, second flow constriction and the discharge spout 12 are as described for inner member 103.

The diameter of the cylindrical filter wall 281 may be smaller than that of the first cylindrical filter wall 81 of the embodiments described above. For example, the diameter of the cylindrical filter wall 281 may be 18.5 mm. As before, the maximum internal diameter of the beverage ingredient chamber 6 may be 57 mm. Therefore, each side of the resultant annular beverage ingredient chamber 6 has a width, w, of 19 mm and a height, h, of 29 mm. Thus a void space is provided that allows beverage ingredient to be filled into the cartridge 1 where the local bed thickness of the beverage ingredient is approximately 1.5 times the local bed width of the beverage ingredient.

Use of the cartridge 201 is the same as described above with reference to cartridge 101 including inner member 103 except in the differences described below.

On injection of the hot water into the inlet chamber 32, the water passes through the opposed slots 233 into the annular void space 44 until it reaches the pair of inlets 213. The water is then diverted to be jetted into the beverage ingredient chamber 6 in a radial direction towards the inner member 203. The water impacts on the inner member 203 and then rebounds and sets up a circulatory pattern within the annular beverage ingredient chamber 6. As before, passage of the hot water within the annular beverage ingredient chamber 6 acts to dissolve the soluble beverage ingredients.

The back pressure of beverage collecting in the annular beverage ingredient chamber 6 forces the beverage under pressure through the filter 208. The beverage passes directly into the annular space 218. The flow of beverage then separates into two flows, the first flow passing through the first channel 19 and first flow constriction and the second flow path passing through the second channel 119 and the second flow constriction as in inner member 103. Thereafter, dispensation is as described previously.

As noted, the described modifications and alternatives above may be made singularly or in any combination, not only in those combinations explicitly mentioned above in the described embodiments. For example, as utilised in some of the worked examples below, embodiments of the cartridge according to the present disclosure may combine the body 2 of Figure 1 (having the jetting slot 33) with an inner member (not illustrated) having a single cylindrical filter wall 281 having filtering apertures 282 and a single eductor. Or in another example, the cartridge may combine the body 202 of Figure 9 (having the opposed slots 133) with an inner member (not illustrated) having a single cylindrical filter wall 281 having filtering apertures 282 and a single eductor.

### Examples

In the following examples cartridges were prepared and then dispensed in a beverage machine using hot water at ∼85°C.

In each test the same composition of beverage ingredients was used - which was a conventional soluble chocolate beverage ingredient mix, comprising:
sugar (∼45-50 %)
cocoa powder (∼5-10%)
whole milk powder (-5-10%)
Skim milk powder (∼15-25%)
whey powder (0-15%)
creamer (0-10%)
with the balance other minor ingredients such as flavours (<1%).

In all cases the soluble powder chocolate beverage ingredient mix was loaded into the cartridge at fill weights ranging from 25-33 g. The cartridge was then sealed with the lid 5. The cartridge was dispensed in a Tassimo® T-20/Amia beverage preparation machine running at 240 V. During dispensation the peak pressures during the 'brew' stage and the 'purge' stage were measured and recorded. The 'brew' stage is the period of the dispensation cycle where the bulk of the hot water is injected into the cartridge to mix with the beverage ingredients and be directed into the receptacle. The 'purge' stage follows the 'brew' stage and involves the injection of steam through the cartridge (although some residual water may also be present) in order to drive out as far as possible liquid from the cartridge into the receptacle. At the end of beverage dispensation, the drink weight delivered into the receptacle and the weight of the wet cartridge were recorded. Finally the wet cartridges were put in an oven at ∼103-105°C for three hours or until all the water had evaporated. The dry residue in grams was measured by weighing the dry cartridges and then the % solids in cup was calculated and expressed as % yield in cup. All tests were repeated 100 times and the results for each cartridge type were averaged.

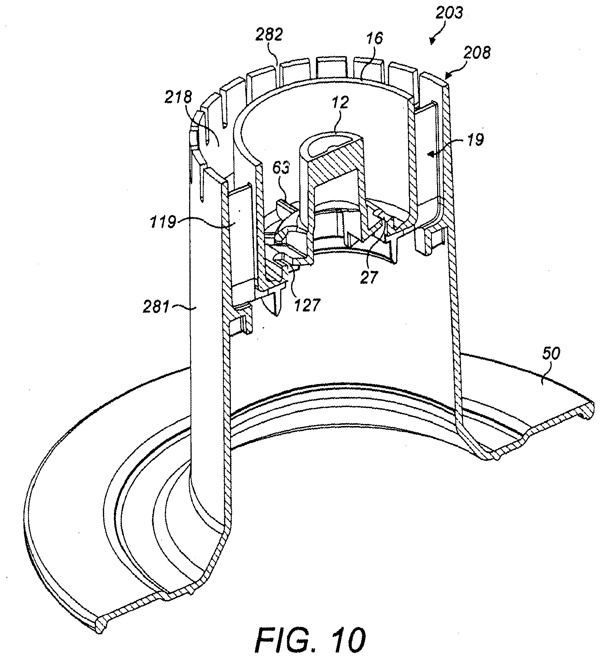

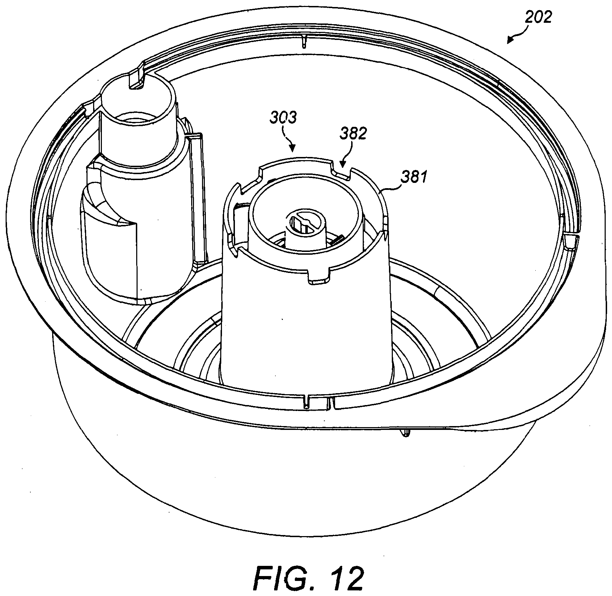

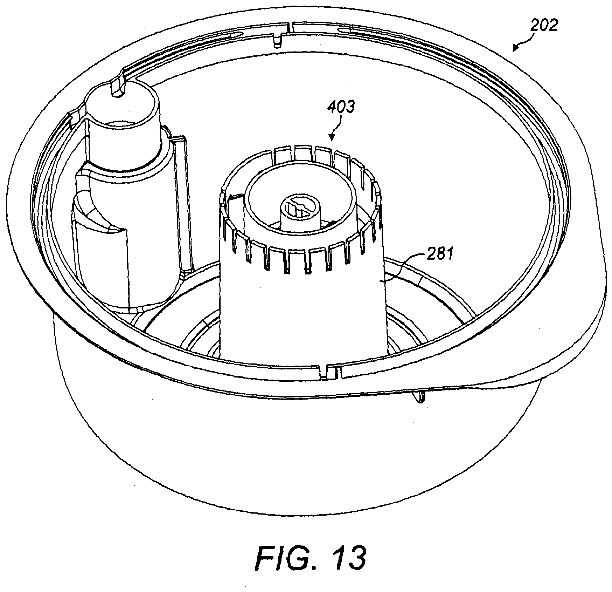

A summary of the results is shown in Table 1 below, wherein:
For Example 1 - a comparative example of a cartridge as shown in Figure 12 was used having a body 202 of the same type as shown in Figure 9, an inner member 303 having a cylindrical wall 381 of diameter 18.5mm and provided with large apertures 382 (not filtering apertures) and having a single eductor. The fill weight of beverage ingredient is 33g.
For Example 2 - a cartridge as shown in Figure 13 was used having a body 202 of the same type as shown in Figure 9, an inner member 403 similar to the inner member 203 as shown in Figure 10 in that it has a single cylindrical filter wall 231 of diameter 18.5mm but only a single eductor. The fill weight is 33g.
For Example 3 - a cartridge was used comprising a body 2 as shown in Figure 1, an inner member having a single cylindrical filter wall of diameter 29mm and having filtering apertures and a single eductor. The fill weight is 25g.
For Example 4 - a cartridge was used comprising a body 2 as shown in Figure 1 and an inner member 103 as shown in Figures 7 and 8 having first and second cylindrical filter walls 81, 91 having filtering apertures therein with the first cylindrical filter wall 81 having a diameter of 29mm. The fill weight is 25g.
For Example 5 - the cartridge used being the same as Example 2 but with a fill weight of 26g.

In each the example the cartridge is sealed with a lid.

**Table 1**

| **Disc Description** | **No. of inlets** | **Powder Fill Weights (g)** | **Average Drink Weight (g)** | **Average Peak Purge Pressure (bar)** | **Average Peak Brew Pressure (bar)** | **Average Wet Residue (g)** | **Average Dry Residue (%)** | **Average Yield (%)** |
|---|---|---|---|---|---|---|---|---|
| **Example 1** | 2 | 33 | 183 | 2.1 | 1.6 | 10.37 | 18 | 82 |
| **Example 2** | 2 | 33 | 180 | 1.6 | 1.0 | 11.3 | 23 | 77 |
| **Example 3** | 1 | 25 | 175 | 1.7 | 1.2 | 8.7 | 15 | 85 |
| **Example 4** | 1 | 25 | 180 | 0.9 | 0.6 | 4.5 | 9 | 91 |
| **Example 5** | 2 | 26 | 179 | 1.5 | 0.9 | 5.4 | 12 | 88 |

As can be seen from the results, the cartridges of Example 1 which do not have a first filter 8 or second filter 9 according to the present disclosure and only possess a single flow restriction in the form of a single eductor suffer from relatively high peak pressures - during the brew stage of 1.6 bar and during the purge stage of 2.1 bar. Whilst not wishing to be bound by theory it is believed that the high peak pressures are caused by partial or full blockage (for at least some of the dispensation cycle) of the single flow restriction at the narrowest point of the slot of the eductor by particles of the beverage ingredient(s) that are either relatively insoluble or have not dissolved sufficiently before reaching the flow restriction. The yield from the cartridges is also relatively low at 82%.

The cartridges of Example 2 which possess only a single filter and a single flow restriction in the form of a single eductor benefit from slightly reduced peak pressures compared to Example 1 - during the brew stage of 1.0 bar and during the purge stage of 1.6 bar. However, the yield from the capsules is low at 77%.

By contrast the cartridges of Examples 3 to 5, benefit from significantly reduced peak pressures in combination with improved yields. Most preferably, the cartridges of Example 4 have low peak pressures - during the brew stage of 0.6 bar and during the purge stage of 0.9 bar in combination with the yield from the capsules being increased to 91%.

Whilst not wishing to be bound by theory it is believed that the improvements, in particular for the cartridges of Examples 3 to 5, comes from a combination of factors. The provision of at least one filter in the form of a filter wall with filtering apertures is believed to help to prevent partial or full blockage of the flow restriction(s) at the narrowest point of the slot of the eductor(s) by particles of the beverage ingredient(s) that are either relatively insoluble or have not dissolved sufficiently, since those particles are held back by the filtering apertures upstream of the flow restriction. In addition, configuring the filter as a cylindrical filter with a large number of individual filtering apertures in the form of slots means that even if some are blocked, others remain to allow the beverage to flow onwards towards the outlet point. Further the swirling, circulating flow within the annular beverage ingredient chamber 6 may have a tendency to 'wash' away the particles from the surface of the filter wall leading to re-opening of blocked filtering apertures. This beneficial effect is enhanced where the inner member has a relatively large diameter compared to the body so that the local bed thickness of the beverage ingredient is 1.5 to 2.2 times the local bed width of the beverage ingredient.

Various further modifications will now be described which may be made to any of the cartridges of the present disclosure as described above (or other cartridges) without departing from the scope of the present disclosure. In the following passages of the description a number of modifications and alternatives will be described that may be made singularly or in any combination unless the context explicitly states otherwise. In the following only the changes will be described in detail. In other respects the cartridges may be as described above or as set out in the appended claims. In the following description, like numbers are used for like features and components.

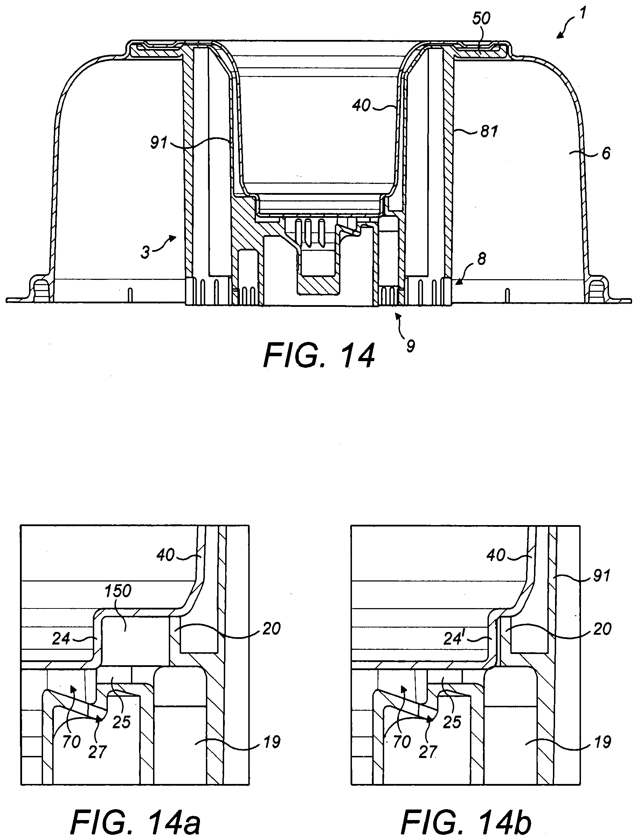

As shown in Figures 14 and 14b a conduit upstream of the or each flow constriction may be configured to prevent deposition of undissolved or partially dissolved beverage ingredient. As can be seen in the version of the cartridge shown in Figure 14a, the shaping and sizing of the centrally-located boss 40 with its cylindrical extension 24 can result in there being a 'dead space' 150 at an upper end of the channel 19 immediately upstream of each flow constriction 10. In the modified cartridge shown in Figure 14b the portion of the channel 19 immediately upstream of the flow constriction 10 has been smoothed by extending the centrally-located boss 40 so that it terminates flush with the upper edge of the slot 25 of the flow restriction 10. This results in there not being any dead spaces, sharp corners or sudden changes in concavity upstream of the flow restriction which might encourage particle deposition.

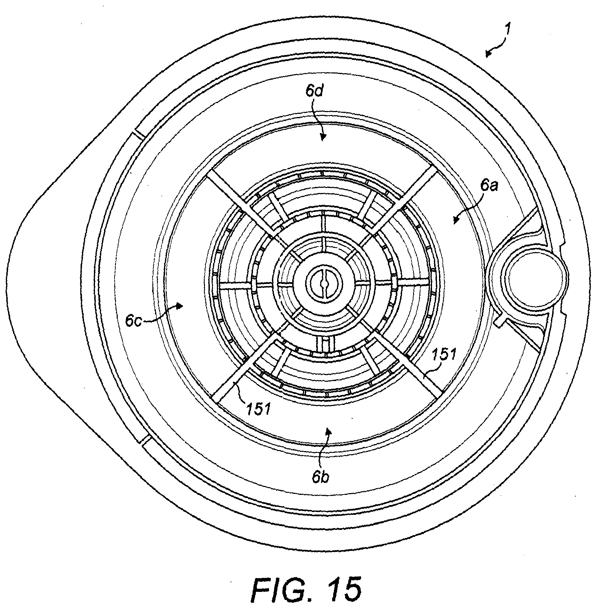

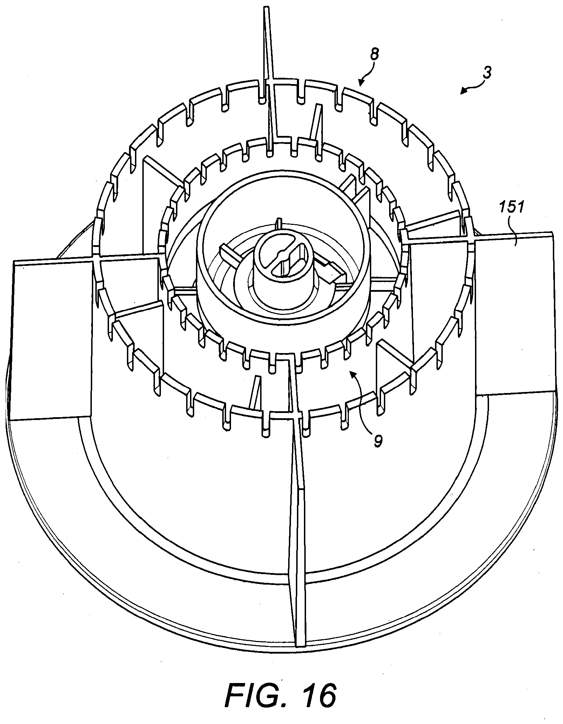

As shown in Figures 15 to 18, the beverage ingredient chamber 6 may comprise one or more partition elements 151 which act to demarcate two or more zones 6a to 6d within the beverage ingredient chamber 6, each of which contain the one or more beverage ingredients. Preferably, the one or more partition elements 151 extend from the first filter 8 towards the body 2 of the cartridge 1. The one or more partitions 151 may be planar as shown in Figure 16 and may be orientated radially within the body 2. In the example shown in Figures 15 and 16 there are four partitions 151 provided equi-spaced around the circumference.

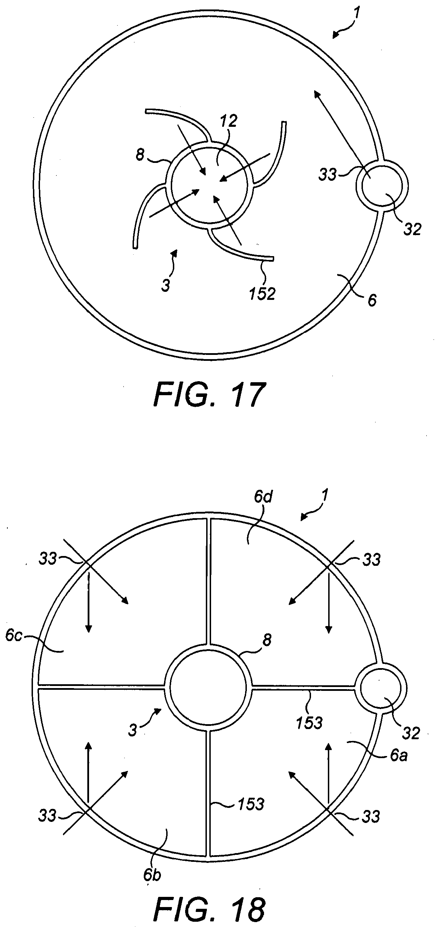

Figure 17 shows an alternative wherein the one or more partitions 152 are curved. This may aid funnelling of the beverage towards the first filter 8.

The one or more partitions 151, 152 may extend from the centrally-located first filter 8 towards the surrounding wall of the body 2. Alternatively, as shown in Figure 18, partitions 153 may be provided which extend into contact with the surrounding wall of the body so as to fully separate zones 6a to 6d, one from the other, within the beverage ingredient chamber 6. Each, separate, zone 6a to 6d will comprise at least one inlet 33 permitting entry of the aqueous medium into the zone and at least a portion of the first filter 8 permitting exit of beverage from the zone.

Advantageously, separating the beverage ingredient chamber 6 into two or more zones 6a to 6d can produce better dissolution of the one or more beverage ingredients by focussing the mixing of the aqueous medium and the beverage ingredients in key areas and providing alternative flow patterns.

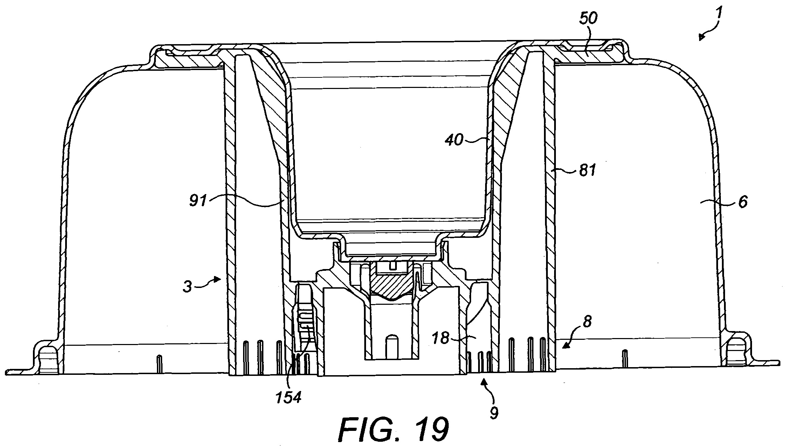

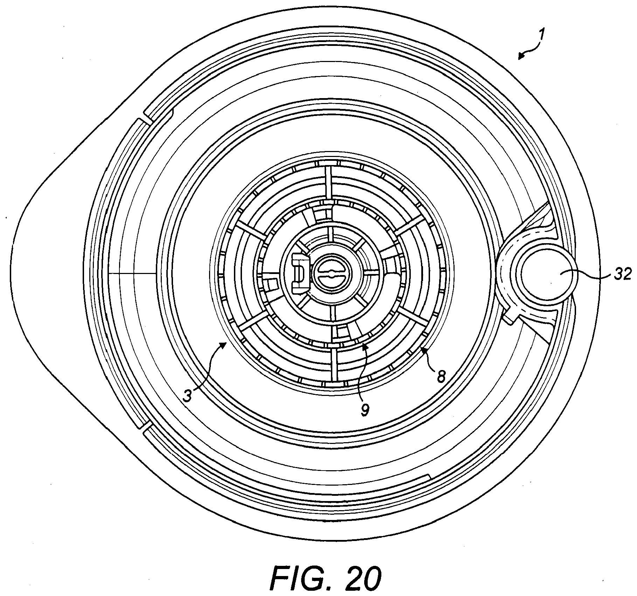

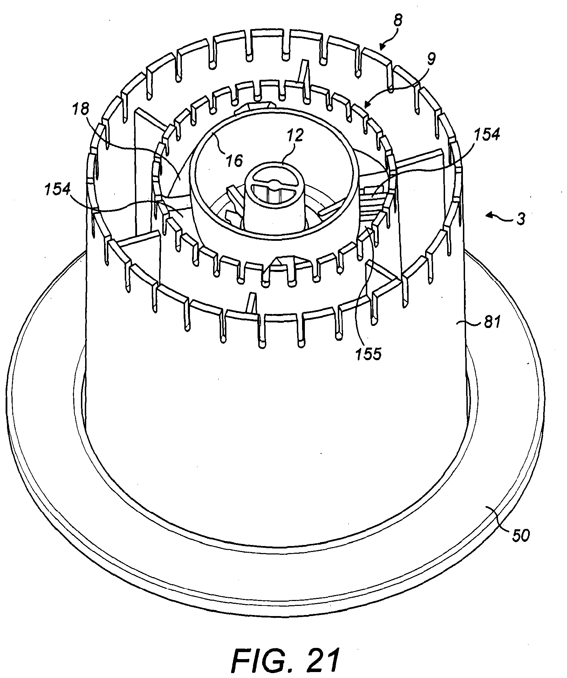

As shown in Figures 19 to 21, a flow path from the filter(s) 8, 9 to the flow constriction(s) 10 may be configured to be spiral in shape. For example, spiral ramp elements 154 may be located within the annular space 18 between the terminal filter (the second filter 9 where present, or the first filter 8 where only one filter is provided) and the cylindrical tube 16, wherein the beverage is forced to flow through the annular space 18 on the way to the flow constriction(s) 10. The spiral ramp elements 154 cause the beverage to spiral around the cylindrical tube 16 creating additional mixing vortices and swirl within the beverage. Advantageously, this flow pattern can help to break up small, partially wetted clumps of beverage ingredient which may have managed to pass the filter(s). Additional obstructions 155, for example, ribs, corners, etc. can be provided on the spiral ramp elements 154 to aid break-up of clumps. In the illustrated example, four spiral ramp elements 154 are provided equi-spaced around the circumference with each spiral ramp element 154 turning through approximately 90 degrees.

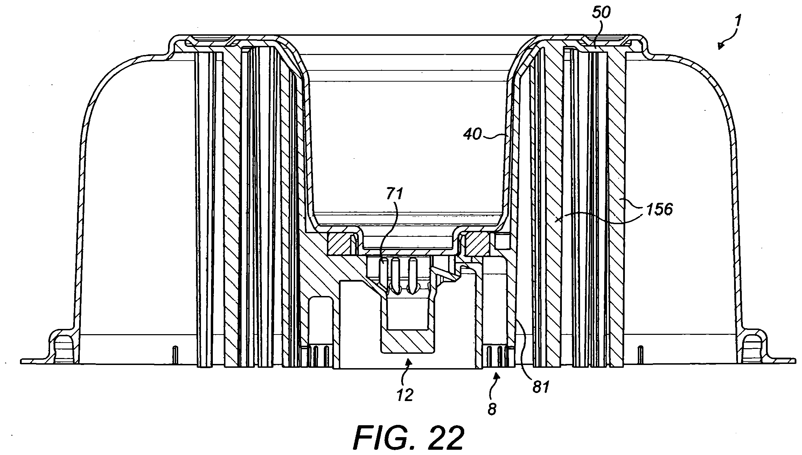

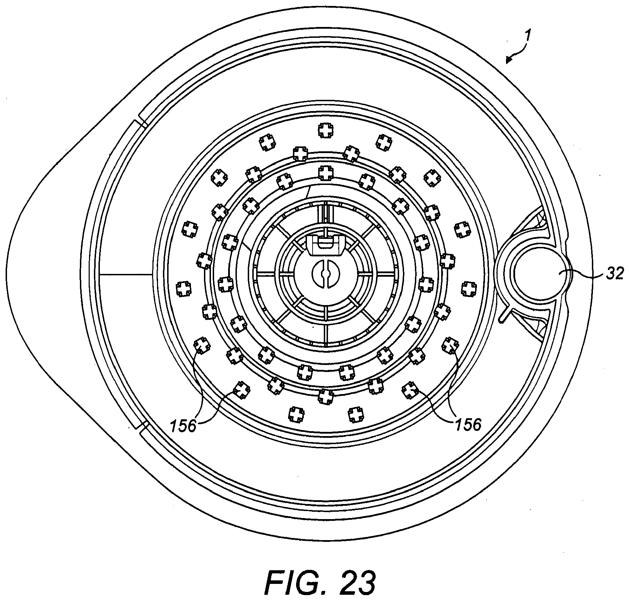

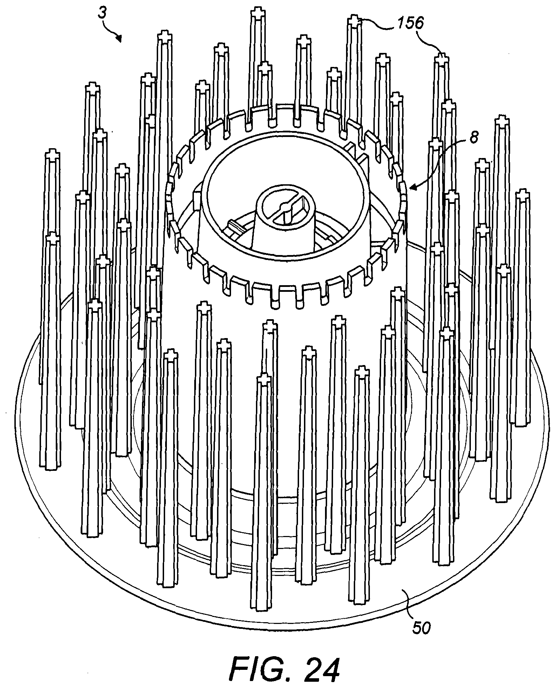

As shown in Figures 22 to 24, the beverage ingredient chamber 6 may contain a plurality of bristles 156. The bristles 156 advantageously can act to disrupt the flow path with the beverage ingredient chamber 6 to promote turbulence and better mixing of the one or more beverage ingredients. The bristles 156 may be arranged around, and spaced from, the first filter 8. The bristles 156 may comprise elongate plastic pins. The bristles may extend the full height of the beverage ingredient chamber 6. The bristles 156 may be formed unitarily as part of the inner member 3 also comprising the first filter 8 received within the body 2. In the example shown, the bristles 156 extend downwards from the mounting flange 50. The bristles 156 are arranged in three concentric rings about the first filter 8. The spacing between neighbouring bristles 156 is such that the bristles 156 do not carry out a filtering function but rather act to break up agglomerations of powdered beverage ingredient.

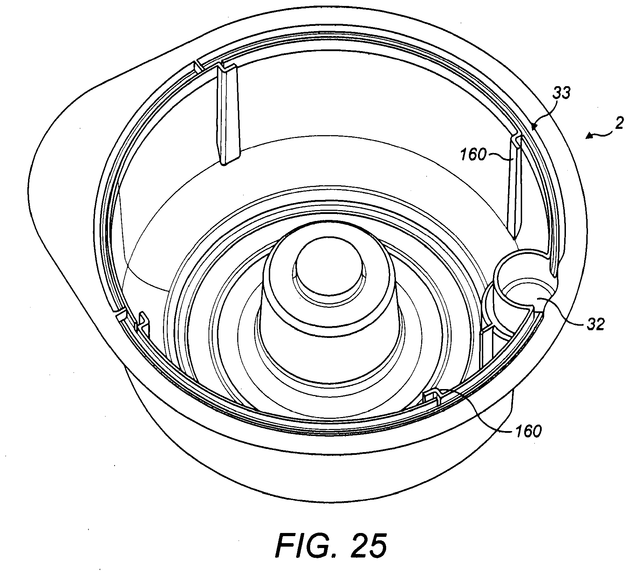

As shown in Figure 25 the body 2 of the annular beverage ingredient chamber 6 may comprise multiple inlet points 33, each of which may be angled so that the flow of aqueous medium entering is stopped from entering radially but is rather angled at greater than 45° and preferably at 90°. As shown in Figure 25 the angling may be achieved by providing an L-shaped cover 160 to each inlet slot 33 so that the flow is turned through 90° before entering the annular beverage ingredient chamber. As shown the body comprises four inlet points 33 spaced at 90° from each other. Other numbers of inlet points can be provided.

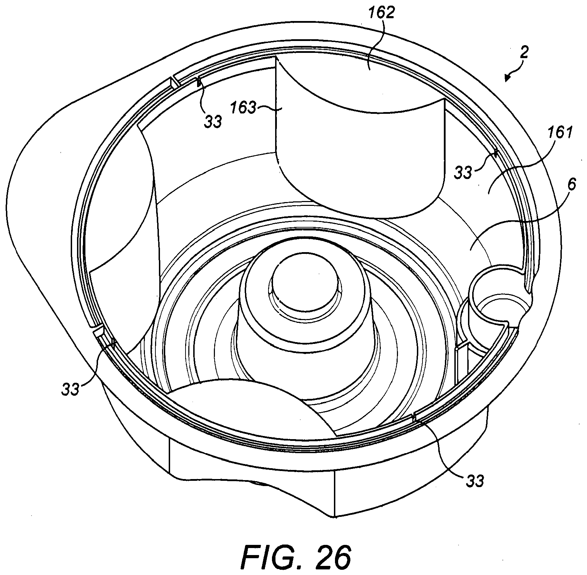

As shown in Figure 26, the body 2 defining the beverage ingredient chamber 6 may have one or more lobes 162 as part of an outer side wall of the beverage ingredient chamber 6. The one or more lobes 162 may be smoothly, convexly curved (when viewed from a centre-point of the cartridge) with a smooth inwardly-directed face 163. A lobe 162 may be provided between pairs of inlet apertures 33 to the beverage ingredient chamber 6. Advantageously, the one or more lobes 162 can improve dissolution of the one or more beverage ingredients by first, confining the incoming aqueous medium to a smaller cross-sectional flow area leading to improved shear forces and higher flow velocities which improve dissolution. Secondly, the one or more lobes 162, when positioned between pairs of inlet apertures 33, tend to decrease the amount of 'dead space' in the beverage ingredient chamber 6. By 'dead space' is meant that part or parts of the volume of the beverage ingredient chamber 6 where circulating flow of the aqueous medium and/or beverage tends not to reach. For example, with an annular beverage ingredient chamber 6 having four equi-spaced radially-directed inlet apertures 33 at, say, 0°, 90°, 180° and 270°, it has been found that the locations by the side wall at 45°, 135°, 225° and 315° tend to be 'dead spaces' which tend not to be reached by circulating flow.

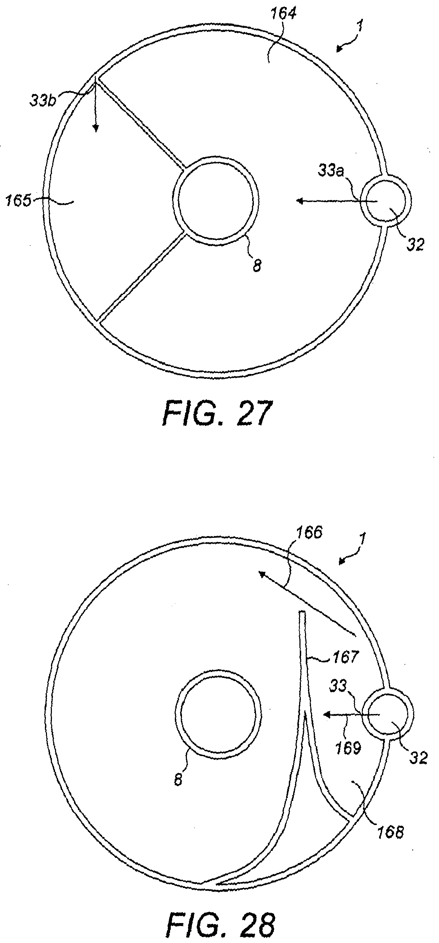

As shown in Figure 27 the beverage ingredient chamber 6 may comprise two or more separate chambers 164, 165 each of which hold a different beverage ingredient. For example, a first chamber 165 may hold sugar or a sugar-containing ingredient and a second chamber 164 may hold a chocolate-containing ingredient. Each, separate, chamber will comprise at least one inlet 33a, 33b permitting entry of the aqueous medium into the chamber and at least a portion of the first filter 8 permitting exit of beverage from the chamber. Advantageously, such an arrangement can be used to tailor the size and number of inlet apertures and the size and number of filtering apertures to each ingredient.

As shown in Figure 28, the beverage ingredient chamber 6 may comprise a dedicated flow-conditioning chamber 168 which receives incoming aqueous medium in a first condition and discharges the aqueous medium into a remainder of the beverage ingredient chamber in a second condition. The first and second conditions may include one or more of: first and second flow velocities, first and second flow directions, and first and second flow compositions. For example, the flow-conditioning chamber 168 may comprise an angled wall 167 to condition an incoming aqueous medium that has a first condition of a relatively low flow velocity, a radial flow direction169 and a composition of pure water into a second condition of a flow having a relatively high flow velocity, a tangential flow direction 166 and a composition of water mixed with one or more beverage ingredients.

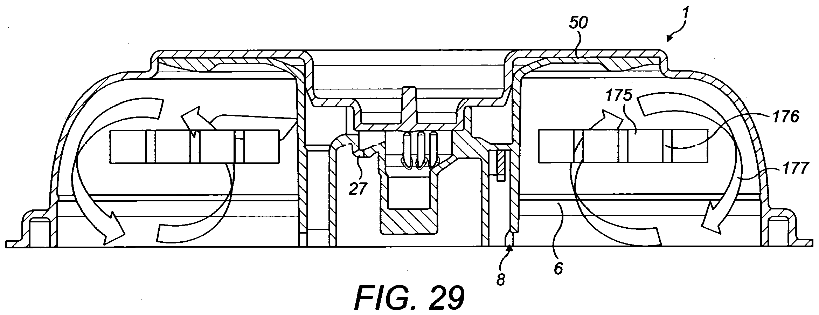

As shown in Figure 29, the beverage ingredient chamber 6 may comprise a plate member 175 which initially rests on a bed of the one or more beverage ingredients. The use of the plate member 175. finds particular application where the inlet(s) 33 to the beverage ingredient chamber are located at or towards a bottom of the beverage ingredient chamber. In use, as the one or more beverage ingredients is incrementally dissolved away beneath the plate member 175 the weight of the plate member 175 (which may be freely movable within the beverage ingredient chamber 6) forces undissolved beverage ingredient higher up in the beverage ingredient chamber downwards into the path of the incoming aqueous medium. The plate member 175 may comprise apertures 176 to allow for circulation of aqueous medium and/or beverage above and below the plate member in use as shown by arrows 177.

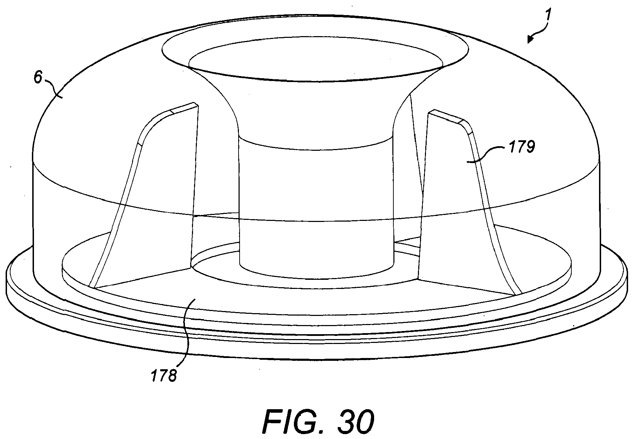

As shown in Figure 30, the beverage ingredient chamber 6 may contain a rotatable mixer blade assembly 178. The rotatable mixer blade assembly 178 may comprise one or more vanes or blades 179 which act to break up agglomerations of powdered beverage ingredient as the rotatable mixer blade assembly 178 rotates within the beverage ingredient chamber 6. Rotation of the rotatable mixer blade assembly 178 is caused by the movement of the aqueous medium and in this case the rotation can be enhanced by jetting the aqueous medium into the beverage ingredient chamber 6 with an tangential directional component so as to generate a whirling flow within the beverage ingredient chamber 6.

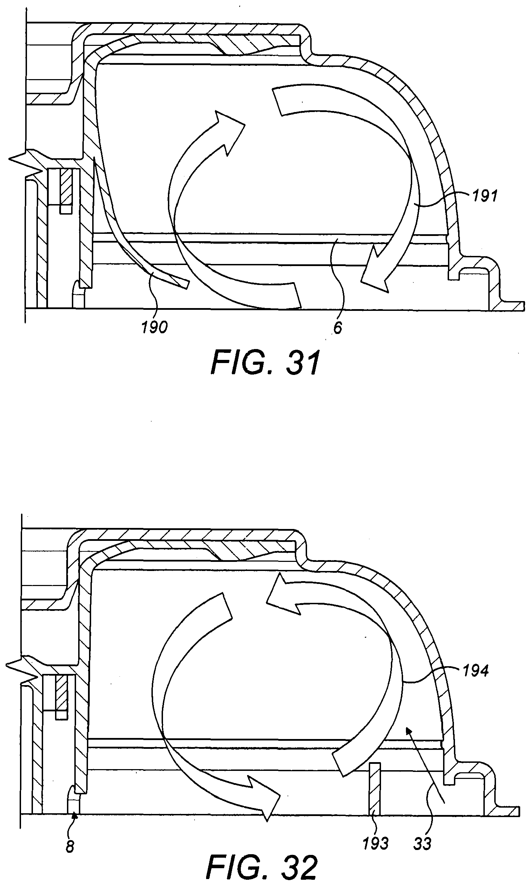

As shown in Figures 31 and 32, the beverage ingredient chamber 6 may comprise one or more baffles orientated to induce vertical vortices within the beverage ingredient chamber. In the example of Figure 31 a curved baffle 190 is provided as part of the inner member 3 and received incoming aqueous medium that is jetted into the beverage ingredient chamber at the bottom of the chamber. The curved baffle 190 directs the flow upwards so that a vertical vortex of flow is created as shown by arrow 191. In the example of Figure 32 a baffle 193 is provided at the base of the beverage ingredient chamber 6 neat the inlet point 33 which causes the incoming fluid to be directed upwards initially to create a vertical vortex as shown by arrow 194.

The disclosure has been described above by way of example as having a body 2, 202 and inner member 3, 103, 203 formed as separate components which are conjoined during assembly of the cartridge. Alternatively the body 2, 202 and inner member 3, 103, 203 may be formed as a single component.

The disclosure has been described above by way of example embodied in a cartridge formed from, amongst other parts, an outer member 2 and an inner member 3. In particular, the flow constriction has been described as delimited by portions of the body 2, 202 and inner member 3, 103, 203. However, it is to be understood that the disclosure is also applicable to apertures formed in a single component rather than from the junction of two components.

The one or more beverage ingredients may be a powder, a concentrated liquid or a gel. The cartridge described is suitable for any product which forms coagulates or agglomerates or which comprises particles susceptible to remaining undiluted by the aqueous medium. For example, beverage ingredients may be concentrated chocolate, flavour enhancing syrups, vitamin supplements or chocolate powder mix, containing insoluble particles of cocoa, which are typically 0.5 to 2mm in size.

The cartridge 1, 101, 201 may be rigid, semi-rigid or flexible. The body 2, may be formed as a single integral piece from high density polyethylene, polypropylene, polystyrene, polyester, or a laminate of two or more of these materials. The body 2, 202 may be opaque, transparent or translucent. The body 2, 202 and/or inner member 3, 103, 203 may be formed from a biodegradable polymer.

The body 2, 202 described above is generally circular or disc-shaped. Alternatively, the body 2, 202 may be of another form suitable for insertion into an on-demand beverage machine, for example the body 2, 202 may be frustroconical or cup-shaped.

The cartridge 1, 101, 201 may be closed by a rigid or semi-rigid lid instead of a flexible laminate.

## Claims

1. A cartridge for preparation of a beverage, the cartridge being sealed prior to use and containing one or more beverage ingredients, the cartridge being suitable to receive in use an aqueous medium which may be brought into contact with the one or more beverage ingredients to produce a beverage which may be output from the cartridge,
the cartridge comprising:
- a body (2) defining a beverage ingredient chamber (6) containing the one or more beverage ingredients;
**characterised in that** the cartridge further comprises:
- a first filter (8) defining an exit from the beverage ingredient chamber (6);
- a second filter (9) downstream of, and spaced apart from, the first filter (8); and
- a flow constriction downstream of the second filter (9),
such that in use beverage produced from the one or more beverage ingredients passes, in order, through the first filter (8), the second filter (9) and the flow constriction
wherein the first filter (8) extends around the second filter (9).

2. A cartridge as claimed in claim 1, wherein the first filter (8) comprises a first filter wall (81) and the second filter comprises a second filter wall (91); and/or
wherein the first filter (8) and the second filter (9) each comprise a rigid element having a plurality of filtering apertures (82,92) located therein.

3. A cartridge as claimed in any preceding claim, wherein the first filter (8) and the second filter (9) are arranged concentrically.

4. A cartridge as claimed in any preceding claim, wherein the first filter (8) comprises a first tubular member having a plurality of first filtering apertures (82) located therein and the second filter (9) comprises a second tubular member having a plurality of second filtering apertures (92) located therein, and preferably the second tubular member is arranged within the first tubular member.

5. A cartridge as claimed in any preceding claim, further comprising a discharge spout (12) for channelling the beverage, in use, towards an outlet of the cartridge, and preferably the first and second filters (8, 9) are arranged around the discharge spout (12); wherein preferably a flow direction, in use, of the beverage flowing from the second filter (9) to the flow constriction is opposed to a flow direction, in use, of the beverage flowing out of the discharge spout (12).

6. A cartridge as claimed in any preceding claim, wherein the cartridge is configured to direct the aqueous medium entering the beverage ingredient chamber (6) to circulate around the first filter (8).

7. A cartridge as claimed in any preceding claim, wherein the beverage ingredient chamber (6) is annular, with the first filter (8) forming at least a part of an inner surface of the annular beverage ingredient chamber (6), and preferably the body (2) of the cartridge is configured to direct the aqueous medium entering the beverage ingredient chamber (6) at an angle greater than 45°, preferably at 90° from a radial direction of the annular beverage ingredient chamber (6) such that the aqueous medium is caused to circulate around the annular beverage ingredient chamber (6).

8. A cartridge as claimed in any preceding claim, wherein the first filter (8) comprises a plurality of first filtering apertures (82) and the second filter (9) comprises a plurality of second filtering apertures (92) and wherein a critical dimension of the first filtering apertures (82) is larger than a critical dimension of the second filtering apertures (92).

9. A cartridge for preparation of a beverage, the cartridge being sealed prior to use and containing one or more beverage ingredients, the cartridge being suitable to receive in use an aqueous medium which may be brought into contact with the one or more beverage ingredients to produce a beverage which may be output from the cartridge, the cartridge comprising:
- a body (2) defining a beverage ingredient chamber (6) containing the one or more beverage ingredients;
**characterised in that** the cartridge further comprises:
- a filter (8) defining an exit from the beverage ingredient chamber (6); and
- a first and a second flow constriction downstream of the filter (8),
wherein the cartridge comprises a first flow path from the filter (8) to the first flow constriction and a second flow path from the filter (8) to the second flow constriction,
wherein the first and second flow constrictions are configured such that, in use, a first beverage jet emanates from the first flow constriction and a second beverage jet emanates from the second flow constriction, and the first and second flow constrictions are configured so that the first and second beverage jets collide.

10. A cartridge as claimed in claim 9, wherein the first and second flow constrictions are located opposite one another such that the first and second beverage jets impact one another substantially head-on; and/or
wherein an air inlet aperture (27, 127) is located in the vicinity of each flow constriction and downstream thereof, such that the jets of beverage each pass over an air inlet aperture (27, 127).

11. A cartridge as claimed in any of claims 9 to 10, wherein the filter (8) comprises a filter wall (81).

12. A cartridge as claimed in any of claims 9 to 11, wherein the filter (8) comprises a rigid element having a plurality of filtering apertures (82) located therein; and/or
wherein the filter (8) comprises a tubular member having a plurality of filtering apertures (82) located therein.

13. A cartridge as claimed in any of claims 9 to 12, wherein the cartridge is configured to direct the aqueous medium entering the beverage ingredient chamber (6) to circulate around the filter.

14. A cartridge as claimed in any of claims 9 to 13, wherein the beverage ingredient chamber (6) is annular, with the filter (8) forming at least a part of an inner surface of the annular beverage ingredient chamber (6), and preferably the body (2) of the cartridge is configured to direct the aqueous medium entering the beverage ingredient chamber (6) at an angle greater than 45°, preferably at 90° from a radial direction of the annular beverage ingredient chamber (6) such that the aqueous medium is caused to circulate around the annular beverage ingredient chamber (6).

15. A cartridge as claimed in any preceding claim, wherein the first filter (8) comprises a plurality of first filtering apertures (82) and the second filter (9), where present, comprises a plurality of second filtering apertures (92) and wherein a critical dimension (being the smallest dimension, for example the width) of the first and/or second filtering apertures (82, 92) is 0.4 to 0.6 mm, preferably 0.5mm.

## Patentansprüche

1. Kapsel für die Zubereitung eines Getränks, wobei die Kapsel vor der Verwendung versiegelt wird und einen oder mehrere Getränkeinhaltsstoffe enthält, wobei die Kapsel geeignet ist, bei Verwendung ein wässriges Medium aufzunehmen, das mit dem einen oder den mehreren Getränkeinhaltsstoffen in Kontakt gebracht werden kann, um ein Getränk herzustellen, das aus der Kapsel ausgegeben werden kann,
wobei die Kapsel umfasst:
- einen Körper (2), der eine Getränkeinhaltsstoffkammer (6) definiert, die den einen oder die mehreren Getränkeinhaltsstoffe enthält;
**dadurch gekennzeichnet, dass** die Kapsel ferner umfasst:
- einen ersten Filter (8), der einen Ausgang der Getränkeinhaltsstoffkammer (6) definiert;
- einen zweiten Filter (9), der dem ersten Filter (8) nachgeschaltet und von diesem beabstandet ist; und
- eine Durchflussverengung stromabwärts des zweiten Filters (9),
so dass bei Verwendung ein aus dem einen oder den mehreren Getränkeinhaltsstoffen hergestelltes Getränk der Reihe nach den ersten Filter (8), den zweiten Filter (9) und die Durchflussverengung durchläuft,
wobei sich der erste Filter (8) um den zweiten Filter (9) herum erstreckt.

2. Kapsel nach Anspruch 1, wobei der erste Filter (8) eine erste Filterwand (81) und der zweite Filter eine zweite Filterwand (91) umfasst; und/oder
wobei der erste Filter (8) und der zweite Filter (9) jeweils ein starres Element mit einer Vielzahl von darin angeordneten Filteröffnungen (82, 92) umfassen.

3. Kapsel nach einem der vorhergehenden Ansprüche, wobei der erste Filter (8) und der zweite Filter (9) konzentrisch angeordnet sind.

4. Kapsel nach einem der vorhergehenden Ansprüche, wobei der erste Filter (8) ein erstes rohrförmiges Element mit einer Vielzahl darin angeordneter erster Filteröffnungen (82) umfasst und der zweite Filter (9) ein zweites rohrförmiges Element mit einer Vielzahl darin angeordneter zweiter Filteröffnungen (92) umfasst und das zweite rohrförmige Element vorzugsweise innerhalb des ersten rohrförmigen Elements angeordnet ist.

5. Kapsel nach einem der vorhergehenden Ansprüche, die ferner einen Auslaufstutzen (12) zum Kanalisieren des Getränks bei Verwendung zu einem Auslass der Kapsel aufweist, wobei der erste und der zweite Filter (8, 9) vorzugsweise um den Auslaufstutzen (12) herum angeordnet sind; wobei vorzugsweise eine Strömungsrichtung des bei Verwendung vom zweiten Filter (9) zur Durchflussverengung fließenden Getränks einer Strömungsrichtung des bei Verwendung aus dem Auslaufstutzen (12) fließenden Getränks entgegengesetzt ist.

6. Kapsel nach einem der vorhergehenden Ansprüche, wobei die Kapsel dafür konfiguriert ist, das in die Getränkeinhaltsstoffkammer (6) eintretende wässrige Medium so zu leiten, dass es um den ersten Filter (8) herum zirkuliert.

7. Kapsel nach einem der vorhergehenden Ansprüche, wobei die Getränkeinhaltsstoffkammer (6) ringförmig ist, wobei der erste Filter (8) mindestens einen Teil einer Innenoberfläche der ringförmigen Getränkeinhaltsstoffkammer (6) bildet und der Körper (2) der Kapsel vorzugsweise dafür konfiguriert ist, das in die Getränkeinhaltsstoffkammer (6) eintretende wässrige Medium in einem Winkel von mehr als 45°, vorzugsweise 90° aus einer radialen Richtung der ringförmigen Getränkeinhaltsstoffkammer (6) so zu leiten, dass das wässrige Medium um die ringförmige Getränkeinhaltsstoffkammer (6) herum zirkuliert.

8. Kapsel nach einem der vorhergehenden Ansprüche, wobei der erste Filter (8) eine Vielzahl erster Filteröffnungen (82) umfasst und der zweite Filter (9) eine Vielzahl zweiter Filteröffnungen (92) umfasst und wobei eine kritische Abmessung der ersten Filteröffnungen (82) größer als eine kritische Abmessung der zweiten Filteröffnungen (92) ist.

9. Kapsel für die Zubereitung eines Getränks, wobei die Kapsel vor der Verwendung versiegelt wird und einen oder mehrere Getränkeinhaltsstoffe enthält, wobei die Kapsel geeignet ist, bei Verwendung ein wässriges Medium aufzunehmen, das mit dem einen oder den mehreren Getränkeinhaltsstoffen in Kontakt gebracht werden kann, um ein Getränk herzustellen, das aus der Kapsel ausgegeben werden kann,
wobei die Kapsel umfasst:
- einen Körper (2), der eine Getränkeinhaltsstoffkammer (6) definiert, die den einen oder die mehreren Getränkeinhaltsstoffe enthält;
**dadurch gekennzeichnet, dass** die Kapsel ferner umfasst:
- einen Filter (8), der einen Ausgang der Getränkeinhaltsstoffkammer (6) definiert; und
- eine erste und eine zweite Durchflussverengung stromabwärts des Filters (8),
wobei die Kapsel einen ersten Strömungsweg vom Filter (8) zur ersten Durchflussverengung und einen zweiten Strömungsweg vom Filter (8) zur zweiten Durchflussverengung umfasst,
wobei die erste und die zweite Durchflussverengung so konfiguriert sind, dass bei Verwendung ein erster Getränkestrahl von der ersten Durchflussverengung ausgeht und ein zweiter Getränkestrahl von der zweiten Durchflussverengung ausgeht und die erste und die zweite Durchflussverengung so konfiguriert sind, dass der erste und der zweite Getränkestrahl aufeinander stoßen.

10. Kapsel nach Anspruch 9, wobei die erste und die zweite Durchflussverengung einander gegenüberliegen, so dass der erste und der zweite Getränkestrahl im Wesentlichen frontal aufeinander treffen; und/oder
wobei eine Lufteinlassöffnung (27, 127) in der Nähe jeder Durchflussverengung und stromabwärts davon angeordnet ist, so dass die Getränkestrahlen jeweils über eine Lufteinlassöffnung (27, 127) laufen.

11. Kapsel nach einem der Ansprüche 9 bis 10, wobei der Filter (8) eine Filterwand (81) umfasst.

12. Kapsel nach einem der Ansprüche 9 bis 11, wobei der Filter (8) ein starres Element mit einer Vielzahl von darin angeordneten Filteröffnungen (82) umfasst; und/oder
wobei der Filter (8) ein rohrförmiges Element mit einer Vielzahl von darin angeordneten Filteröffnungen (82) umfasst.

13. Kapsel nach einem der Ansprüche 9 bis 12, wobei die Kapsel dafür konfiguriert ist, das in die Getränkeinhaltsstoffkammer (6) eintretende wässrige Medium so zu leiten, dass es um den Filter herum zirkuliert.

14. Kapsel nach einem der Ansprüche 9 bis 13, wobei die Getränkeinhaltsstoffkammer (6) ringförmig ist, wobei der Filter (8) mindestens einen Teil einer Innenoberfläche der ringförmigen Getränkeinhaltsstoffkammer (6) bildet und der Körper (2) der Kapsel vorzugsweise dafür konfiguriert ist, das in die Getränkeinhaltsstoffkammer (6) eintretende wässrige Medium in einem Winkel von mehr als 45°, vorzugsweise 90° aus einer radialen Richtung der ringförmigen Getränkeinhaltsstoffkammer (6) so zu leiten, dass das wässrige Medium um die ringförmige Getränkeinhaltsstoffkammer (6) herum zirkuliert.

15. Kapsel nach einem der vorhergehenden Ansprüche, wobei der erste Filter (8) eine Vielzahl erster Filteröffnungen (82) umfasst und der zweite Filter (9), sofern vorhanden, eine Vielzahl zweiter Filteröffnungen (92) umfasst, und wobei eine kritische Abmessung (welche die kleinste Abmessung ist, zum Beispiel die Breite) der ersten und/oder zweiten Filteröffnungen (82, 92) 0,4 bis 0,6 mm, vorzugsweise 0,5 mm beträgt.

## Revendications

1. Cartouche pour la préparation d'une boisson, la cartouche étant scellée avant utilisation et contenant un ou plusieurs ingrédients de boisson, la cartouche étant adaptée pour recevoir en utilisation un milieu aqueux qui peut être mis en contact avec les un ou plusieurs ingrédients de boisson pour produire une boisson qui peut être sortie de la cartouche,
la cartouche comprenant :
- un corps (2) définissant une chambre d'ingrédient de boisson (6) contenant les un ou plusieurs ingrédients de boisson ;
**caractérisée en ce que** la cartouche comprend en outre :
- un premier filtre (8) définissant une sortie de la chambre d'ingrédient de boisson (6) ;
- un deuxième filtre (9) en aval, et espacé, du premier filtre (8) ; et
- un étranglement d'écoulement en aval du deuxième filtre (9),
de telle sorte qu'en utilisation une boisson produite à partir des un ou plusieurs ingrédients de boisson passe, dans l'ordre, à travers le premier filtre (8), le deuxième filtre (9) et l'étranglement d'écoulement
dans laquelle le premier filtre (8) s'étend autour du deuxième filtre (9).

2. Cartouche selon la revendication 1, dans laquelle le premier filtre (8) comprend une première paroi de filtre (81) et le deuxième filtre comprend une deuxième paroi de filtre (91) ; et/ou
dans laquelle le premier filtre (8) et le deuxième filtre (9) comprennent chacun un élément rigide ayant une pluralité d'ouvertures de filtrage (82, 92) situées dans celui-ci.

3. Cartouche selon l'une quelconque des revendications précédentes, dans laquelle le premier filtre (8) et le deuxième filtre (9) sont agencés de manière concentrique.

4. Cartouche selon l'une quelconque des revendications précédentes, dans laquelle le premier filtre (8) comprend un premier élément tubulaire ayant une pluralité de premières ouvertures de filtrage (82) situées dans celui-ci et le deuxième filtre (9) comprend un deuxième élément tubulaire ayant une pluralité de deuxièmes ouvertures de filtrage (92) situées dans celui-ci, et de préférence le deuxième élément tubulaire est agencé à l'intérieur du premier élément tubulaire.

5. Cartouche selon l'une quelconque des revendications précédentes, comprenant en outre un bec d'évacuation (12) pour canaliser la boisson, en utilisation, vers une sortie de la cartouche, et de préférence les premier et deuxième filtres (8, 9) sont agencés autour du bec d'évacuation (12) ; dans laquelle de préférence une direction d'écoulement, en utilisation, de la boisson s'écoulant du deuxième filtre (9) à l'étranglement d'écoulement est opposée à une direction d'écoulement, en utilisation, de la boisson s'écoulant hors du bec d'évacuation (12).

6. Cartouche selon l'une quelconque des revendications précédentes, dans laquelle la cartouche est configurée pour diriger le milieu aqueux entrant dans la chambre d'ingrédient de boisson (6) pour circuler autour du premier filtre (8).

7. Cartouche selon l'une quelconque des revendications précédentes, dans laquelle la chambre d'ingrédient de boisson (6) est annulaire, avec le premier filtre (8) formant au moins une partie d'une surface interne de la chambre d'ingrédient de boisson annulaire (6), et de préférence le corps (2) de la cartouche est configuré pour diriger le milieu aqueux entrant dans la chambre d'ingrédient de boisson (6) selon un angle supérieur à 45°, de préférence à 90° d'une direction radiale de la chambre d'ingrédient de boisson annulaire (6) de telle sorte que le milieu aqueux est amené à circuler autour de la chambre d'ingrédient de boisson annulaire (6).

8. Cartouche selon l'une quelconque des revendications précédentes, dans laquelle le premier filtre (8) comprend une pluralité de premières ouvertures de filtrage (82) et le deuxième filtre (9) comprend une pluralité de deuxièmes ouvertures de filtrage (92) et dans laquelle une dimension critique des premières ouvertures de filtrage (82) est plus grande qu'une dimension critique des deuxièmes ouvertures de filtrage (92).

9. Cartouche pour la préparation d'une boisson, la cartouche étant scellée avant utilisation et contenant un ou plusieurs ingrédients de boisson, la cartouche étant adaptée pour recevoir en utilisation un milieu aqueux qui peut être mis en contact avec les un ou plusieurs ingrédients de boisson pour produire une boisson qui peut être sortie de la cartouche,
la cartouche comprenant :
- un corps (2) définissant une chambre d'ingrédient de boisson (6) contenant les un ou plusieurs ingrédients de boisson ;
**caractérisée en ce que** la cartouche comprend en outre :
- un filtre (8) définissant une sortie de la chambre d'ingrédient de boisson (6) ; et
- un premier et un deuxième étranglement d'écoulement en aval du filtre (8),
dans laquelle la cartouche comprend un premier trajet d'écoulement du filtre (8) au premier étranglement d'écoulement et un deuxième trajet d'écoulement du filtre (8) au deuxième étranglement d'écoulement,
dans laquelle les premier et deuxième étranglements d'écoulement sont configurés de telle sorte que, en utilisation, un premier jet de boisson émane du premier étranglement d'écoulement et un deuxième jet de boisson émane du deuxième étranglement d'écoulement, et les premier et deuxième étranglements d'écoulement sont configurés de telle sorte que les premier et deuxième jets de boisson entrent en collision.

10. Cartouche selon la revendication 9, dans laquelle les premier et deuxième étranglements d'écoulement sont situés opposés l'un à l'autre de telle sorte que les premier et deuxième jets de boisson se heurtent sensiblement de face l'un à l'autre ; et/ou
dans laquelle une ouverture d'entrée d'air (27, 127) est située à proximité de chaque étranglement d'écoulement et en aval de celui-ci, de telle sorte que les jets de boisson passent chacun sur une ouverture d'entrée d'air (27, 127).

11. Cartouche selon l'une quelconque des revendications 9 à 10, dans laquelle le filtre (8) comprend une paroi filtrante (81).

12. Cartouche selon l'une quelconque des revendications 9 à 11, dans laquelle le filtre (8) comprend un élément rigide ayant une pluralité d'ouvertures de filtrage (82) situées dans celui-ci ; et/ou
dans laquelle le filtre (8) comprend un élément tubulaire ayant une pluralité d'ouvertures de filtrage (82) situées dans celui-ci.

13. Cartouche selon l'une quelconque des revendications 9 à 12, dans laquelle la cartouche est configurée pour diriger le milieu aqueux entrant dans la chambre d'ingrédient de boisson (6) pour circuler autour du filtre.

14. Cartouche selon l'une quelconque des revendications 9 à 13, dans laquelle la chambre d'ingrédient de boisson (6) est annulaire, avec le filtre (8) formant au moins une partie d'une surface interne de la chambre d'ingrédient de boisson annulaire (6), et de préférence le corps (2) de la cartouche est configuré pour diriger le milieu aqueux entrant dans la chambre d'ingrédient de boisson (6) selon un angle supérieur à 45°, de préférence à 90° d'une direction radiale de la chambre d'ingrédient de boisson annulaire (6) de telle sorte que le milieu aqueux est amené à circuler autour de la chambre d'ingrédient de boisson annulaire (6).

15. Cartouche selon l'une quelconque des revendications précédentes, dans laquelle le premier filtre (8) comprend une pluralité de premières ouvertures de filtrage (82) et le deuxième filtre (9), où il est présent, comprend une pluralité de deuxièmes ouvertures de filtrage (92) et dans laquelle une dimension critique (étant la plus petite dimension, par exemple la largeur) des première et/ou deuxième ouvertures de filtrage (82, 92) est de 0,4 à 0,6 mm, de préférence de 0,5 mm.
